# EUROPÄISCHE PATENTSCHRIFT

(11) **EP 0 517 869 B1**
(45) Veröffentlichungstag und Bekanntmachung des Hinweises auf die Patenterteilung: **20.05.1998**
(21) Anmeldenummer: 92901131.0
(22) Anmeldetag: 30.12.1991
(51) Int. Cl.: C04B 7/02, C04B 22/14, C04B 28/04

(54) **Hydraulisches Bindemittel und Verfahren zu dessen Herstellung**
Hydraulic binder and process for its manufacture
Liant hydraulique et procédé de son préparation

(30) Priorität: 28.12.1990 CH 4143/90; 19.08.1991 CH 2446/91
(43) Veröffentlichungstag der Anmeldung: 16.12.1992
(73) Patentinhaber: HOLDERBANK FINANCIERE GLARUS AG, CH-8750 Glarus (CH)
(72) Erfinder: SCHWARZ, Wolfgang, A-1080 Wien (AT); André Lerat, 7000 MONS (BE)
(74) Vertreter: Roshardt, Werner Alfred, Dipl.-Phys.
(86) Internationale Anmeldenummer: CH9100280
(87) Internationale Veröffentlichungsnummer: WO9212100

(56) Entgegenhaltungen:
- DE-A- 2 819 483
- US-A- 3 861 929
- US-A- 4 230 499
- CHEMICAL ABSTRACTS, vol. 113, no. 4, 23. Juli 1990, Columbus, Ohio, US; abstract no. 28413N, & JP,A,01 275 456
- WORLD PATENTS INDEX LATEST Week 8345, Derwent Publications Ltd., London, GB; AN 83-811940 & JP,A,58 167 460
- F.M.LEA 'The Chemistry of Cement and Concrete' 1970 , 3RD ED., EDWARD ARNOLD , LONDON,GB

## Beschreibung

### Technisches Gebiet

Die Erfindung betrifft ein hydraulisches Bindemittel gemäss Oberbegriff des Anspruchs 1. Die Erfindung betrifft ferner einen Mörtel oder Frischbeton und ein Verfahren zur Herstellung eines Portlandzements zur Verwendung in einem hydraulischen Bindemittel.

### Stand der Technik

Die hydraulischen Bindemittel umfassen diverse genormte Zemente, zu deren Hauptvertreter der Portlandzement gehört. Er besteht im wesentlichen aus hochbasischen Verbindungen von Kalk mit Kieselsäure (SiO2), Aluminiumoxid (A12O3) und Eisen(III)Oxid (Fe203). Als Nebenbestandteile enthält er in oxidischer Form Magnesium, Alkalien, Titan und Mangan. Das Mineralgefüge des Portlandzements besteht aus C3S (Tricalciumsilikat), C2S (Dicalciumsilikat), C3A (Tricalciumaluminat) und C4AF (Tetracalciumaluminatferret).

Der Portlandzement entsteht gemäss Norm (ASTM C150, DIN 1164) durch Feinmahlung von Portlandzementklinker mit Calciumsulfat (Gips). Die ungefähre chemische Zusammensetzung der Portlandzemente ist die folgende:

| | |
|---|---|
| SiO2 | 18-33 Gew.-% |
| A12O3 | 3-7 Gew.-% |
| Fe203 | 2-4.5 Gew.-% |
| CaO | 60-65 Gew.-% |
| SO3 | 2-4 Gew.-% |

Allgemein bekannte Eigenschaften handelsüblicher gewöhnlicher Portlandzemente sind unter anderem die relativ niedrigen Frühfestigkeiten sowie die geringe Dauerhaftigkeit und Beständigkeit gegenüber Umwelteinflüssen, wie z. B. Frost, Tausalz und sulfathaltigen Wassern. Die unbefriedigende Dauerhaftigkeit ist im wesentlichen bedingt durch die aufgrund der recht hohen Wasser/Zement-Werte hohen Porosität der mit dem Bindemittel hergestellten Mörtel- und Betonmischungen (ca. 16-18 Vol.-%). Nachteilig ist bei den gewöhnlichen Portlandzementen ferner die erhebliche Volumenkontraktion (Schwund) nach dem Abbinden.

Für ein weites Feld von Spezialanwendungen besteht in der Bauindustrie und im Baugewerbe seit langem ein Bedarf nach einem hydraulischen Zement mit hohen Frühfestigkeiten und niedriger Porosität.

Im beschränkten Mass lassen sich bei Portlandzementen bereits ohne Zusatzmittel erhöhte Festigkeiten erzielen. Dies ist einerseits durch Erhöhung der Mahlfeinheit (Blaine 4000-5500 cm²/g) andererseits durch Erhöhung des C3A-Gehaltes möglich. Die Problematik liegt aber darin, dass mit der Mahlfeinheit der Wasserbedarf der Zemente in unerwünschter Weise zunimmt und mit zunehmendem C3A-Gehalt die Sulfatbeständigkeit schwindet.

Es ist bekannt, dass die Dauerhaftigkeit und insbesondere die erzielbaren Festigkeiten mit abnehmender Porosität des Mörtels bzw. der Betonmischung zunehmen. Daher können durch die Verringerung des Wasser/Zement-Verhältnisses ernorme Festigkeitssteigerungen erreicht werden. Um trotzdem die Fliessfähigkeit des Frischbetons auf einem für die Verarbeitung erforderlichen Niveau zu halten, werden sogenannte Verflüssiger (sulfonierte Formaldehydharze oder Ligninosulfate) eingesetzt. Der Wasserbedarf von Portlandzementen kann so auf 30% (üblich ca. 50%) und bei zusätzlicher Verwendung von Additiven wie Mikrosilika auf bis zu 20% gesenkt werden. Damit wurden 8-12 h nach Herstellung der Betonmischung Druckfestigkeiten von bis zu 24 MPa erreicht werden.

Hohe Frühfestigkeiten (15-20 MPa früher als 6 h nach dem Ansetzen des Frischbetons) werden mit feinstgemahlenen Portlandzementen nur unter Zusatz von chemischen Aktivatoren wie Calciumchlorid oder Alkaliaktivatoren wie Alkalihydroxiden, -Karbonaten, -Aluminaten, -Silikaten erzielt. Oft werden die Aktivatoren in Verbindung mit Verflüssigern und Abbindeverzögerern eingesetzt. Die genannten Zusatzmittel lassen sich auch bei hydraulischen Bindemitteln, die sich in ihrer Zusammensetzung deutlich vom Portlandzement unterscheiden (z. B. bei Calciumfluoraluminat- und Calciumsulfoanominat-Zementen) mit dem angestrebten Effekt einsetzen.

Anwendung finden solche hochfrühfesten Bindemittelformulierungen vor allem als Spritzbeton oder Trockenmörtel für Betonarbeiten, bei denen Zeitersparnis mit einer enormen Kostenersparnis verbunden ist, wie z. B. Reparatur von Autobahn-, Garagen- und Landebahnbelägen oder Formen für Metallgiessereien.

Aus der US 4,842,649 ist ein hydraulisches Bindemittel bekannt, das sowohl bei hohen als auch bei tiefen Temperaturen, insbesondere unter dem Gefrierpunkt von Wasser, zuverlässig härtet. Dieses unter dem Markennamen "Pyrament" bekannte Bindemittel besteht aus 50-80 Gew.-% Portlandzement und diversen Zusatzstoffen wie z. B. Kohlekraftwerksflugasche, Hochofenschlacke, Metakaolin, Mikrosilika, sowie aktivierenden Zusatzmitteln, wie Alkalihydroxide oder -karbonate und bei Bedarf Zitronensäuren und Zitraten als Abbindeverzögerer. Die hohen Früh- und Endfestigkeiten entsprechender Betonformulierungen werden offenbar durch die Aktivierung und Beschleunigung der puzzolanischen Reaktion zwischen Hydroxiden und silikatischen oder alumino-silikatischen Materialien bewirkt.

Von Nachteil bei dem bekannten Bindemittel ist die grosse Anzahl und Menge der z. T. kostspieligen (Mikrosilikat, Metakaolin) Zusatzstoffe zum Portlandzement, die einen aufwendigen Mischprozess erfordern. Ferner haben praktische Versuche gezeigt, dass die Abbindezeiten sehr schwierig zu kontrollieren sind.

Aus der JP 59-064 551 ist eine Spritzbeton-Formulierung bekannt, bei der einer Mischung aus Portlandzement, Calciumaluminat-Zement und Alkalikarbonat als Verzögerer eine Karboxylsäure, insbesondere Zitronensäure oder Zitrat, zugegeben wird. Auf diese Weise sollen sowohl hohe Früh- als auch Endfestigkeiten bei guter Verarbeitbarkeit erreicht werden.

Für viele Anwendungen ist eine ausreichende Verarbeitbarkeitsdauer unerlässlich. Der reproduzierbaren Einstellbarkeit der Abbindezeit von hochfrühfesten Betonmischungen kommt daher eine zentrale Bedeutung zu.

Praktische Versuche haben gezeigt, dass allen bis anhin bekannten Bindemitteln zur Erlangung von hochfrühfestem Beton der Nachteil einer ungenügend reproduzierbaren Einstellbarkeit der Abbindezeiten anhaftet. Ferner sind viele der bekannten Spezialzemente empfindlich bezüglich ihrer Eigenschaften (Verarbeitbarkeit, Abbindezeit, Festigkeitsentwicklung) gegenüber Aenderungen des Wasser/Bindemittelverhältnisses und der Temperatur bei der Frischbetonherstellung.

Der Einsatz der bekannten hochfrühfesten hydraulischen Bindemittel blieb wegen der genannten Nachteile auf wenige und volumenmässig nicht ins Gewicht fallende Anwendungen beschränkt.

### Darstellung der Erfindung

Der Kern der Erfindung liegt in der Erkenntnis, dass in aktivierten, auf Portlandzement resp. Portlandzementklinker basierenden hydraulischen Bindemitteln die Calciumsulfatphase einen entscheidenden Einfluss auf die Eigenschaften des frischen und des erhärteten Betons hat. Die Effizienz und z. T. die grundsätzliche Wirkungsweise von Zusatzmitteln hängt in einem starken Mass vom Calciumsulfathalbhydratgehalt ab.

Die Zusatzmittel (wie z. B. Zitronensäure und Kaliumkarbonat) beeinflussen nämlich nicht nur die Reaktivität der Klinkerphasen, sondern reagieren auch mit den Calciumsulfatphasen. Die Reaktionsprodukte der letztgenannten Reaktionen spielen für die Festigkeitsentwicklung eine grosse Rolle. Ursache dafür dürften die der Zementhydratation vorgelagerten bzw. die parallel zu ihr ablaufenden Reaktionen der Additive sein: Gelöstes Karbonat bzw. Bikarbonat reagiert mit den Calciumsulfatphasen (Dihydrat, Halbhydrat) innert kürzester Zeit (in den relevanten Konzentrationsverhältnissen innerhalb weniger als 1 Min.) zu Calciumkarbonat und Kaliumsulfat. In Konzentrationen von weniger als 1 Gew.-% trägt dieses Reaktionsprodukt in erwünschter Weise zu erhöhter Frühfestigkeit bei. In zu hohen Konzentrationen (> 2 Gew.-%) verringert es jedoch vornehmlich die Langzeitfestigkeiten.

Aufgabe der Erfindung ist es nun, ein hydraulisches Bindemittel der eingangs genannten Art anzugeben, das die beim Stand der Technik vorhandenen Nachteile vermeidet und welches insbesondere die reproduzierbare Einstellbarkeit von Verarbeitbarkeit, Abbindezeit, Früh- und/oder Langzeitfestigkeit durch gezielte Zugabe von Additiven ermöglicht.

Gemäss der Erfindung wird die Aufgabe durch die kennzeichnenden Merkmale der Ansprüche 1 und 2 gelöst.

Die Umwandlung vom Dihydrat in Calciumkarbonat und Kaliumsulfat kann durch geeignete Zusatzmittel (z. B. Kaliumzitrat) gesteuert werden.

Von daher leuchtet es ein, dass zur Steuerung der genannten Reaktionen nicht nur die Mengen und Molverhältnisse der Zusatzmittel, sondern auch die Mengen der reagierenden Calciumsulfatphasen, d. h. insbesondere das Calciumsulfathalbhydrat berücksichtigt werden müssen.

Beim gleichzeitigen Vermahlen von Portlandzementklinker und Gips (Dihydrat) bildet sich bei den üblichen grosstechnischen Anlagen in Abhängigkeit von den Produktionsbedingungen eine unkontrollierte Menge an Halbhydrat. Wenn nun solche, zwar normgemässe, in ihrem Halbhydratgehalt aber undefinierte Portlandzemente zur Herstellung von hydraulischen Bindemitteln einfach mit bestimmten Mengen an Additiven vermischt werden, dann sind die Eigenschaften der entsprechenden Betonformulierung dem Zufall überlassen. Im Wissen um die der Erfindung zugrundliegenden Zusammenhänge erstaunt es daher nicht, dass beim Stand der Technik die Reproduzierbarkeit der erzielten Ergebnisse unbefriedigend war.

Wird gemäss der Erfindung ein Portlandzement mit bekanntem Halbhydratgehalt mit aktivierenden bzw. verzögernden Additiven vermischt, dann sind die Eigenschaften der entsprechenden Betonformulierung reproduzierbar eingestellt. In welchen Mengen und Verhältnissen die verschiedenen Zusatzmittel zuzugegeben sind, hängt von den angestrebten Früh- und Langzeitfestigkeiten, der Abbindezeit und der Verarbeitbarkeit ab.

Versuche haben gezeigt, dass Abbindezeiten, Konsistenz und Festigkeiten auf Aenderungen der relevanten Parameter im Bindemittel (Klinkerzusammensetzung, Klinkerqualität, Calciumsulfatgehalt, Zusatzmittelmenge, Wasser/Zement-Wert) in vorteilhafter Weise unempfindlich sind, wenn (gerechnet als Dihydrat) weniger als 50 Gew.-% insbesondere weniger als 20 Gew.-% des Calciumsulfats als Halbhydrat vorliegt. Mit abnehmendem Halbhydratgehalt nimmt dabei auch die Empfindlichkeit ab.

Gemäss einem besonders bevorzugten Verfahren wird zunächst der Portlandzementklinker gipsfrei vermahlen und erst danach ein calciumsulfathaltiges Zusatzmittel und mindestens ein aktivierendes, festigkeiterhöhendes Zusatzmittel bei Temperaturen von weniger als 120 °C, vorzugsweise weniger als 70 °C zugemischt. Durch das gipsfreie Vermahlen wird die Erzeugung von Halbhydrat ausgeschlossen.

Ein Verfahren zur Herstellung eines Portlandzements, welches sich für die Herstellung eines erfindungsgemässen Bindemittels eignet, zeichnet sich dadurch aus, dass Portlandzementklinker zusammen mit einer gegebenen Menge an Dihydrat vermahlen wird. Die Prozesstemperatur und/oder die Feuchtigkeit wird beim Vermahlen so eingestellt, dass der Calciumsulfathalbhydratgehalt des erzeugten Portlandzementes einen vorbestimmten maximalen Wert nicht überschreitet. Der Halbhydratgehalt wird durch in bestimmten Zeitabständen vorgenommene Messungen bestimmt. Dieses Verfahren hat den Vorteil, dass die bekannten grosstechnischen Anlagen mit geringem technischen Aufwand (Gerät zur Bestimmung des Halbhydratgehalts) zur Herstellung des erfindungsgemässen Portlandzements eingesetzt werden können.

Eine weitere Möglichkeit zur Herstellung eines Portlandzements besteht darin, dass Portlandzementklinker zusammen mit einem gegebenen Mengenverhältnis an Dihydrat und Anhydrid vermahlen wird, so dass der Calciumsulfathalbhydratgehalt des erzeugten Portlandzementes einen vorbestimmten maximalen Wert nicht überschreitet. Auch dieses Verfahren lässt sich problemlos mit den bekannten Anlagen implementieren. Beiden Varianten ist der Vorteil gemeinsam, dass der Gips nicht separat gemahlen werden muss.

Ein hydraulisches Bindemittel zur Herstellung von Mörtel- oder Betonmischungen mit hoher Früh- und Langzeitfestigkeit, welches auf einem Portlandzementklinker, einer Calciumsulfatphase und Zusatzmitteln zum Einstellen von Verarbeitbarkeit, Abbindezeit, Früh- und/oder Langzeitfestigkeit basiert, zeichnet sich gemäss der Erfindung durch einen definierten maximalen Calciumsulfathalbhydratgehalt von weniger als 50 Gew.-% gerechnet als Dihydrat aus. .

Insbesondere wenn die Zusatzmittel Kaliumbikarbonat umfassen, ist ein Halbhydratgehalt von weniger als 20 Gew.-% von Vorteil.

Als Zusatzmittel zur Verlängerung der Abbindezeit eignet sich ein calciumsulfathaltiges Additiv. Vorzugsweise hat dieses die Form von Gips, Anhydrit oder einem Gemisch von beidem.

Vorzugsweise ist die Menge des calciumsulfathaltigen Zusatzmittels so bemessen, dass der Calciumgehalt des Bindemittels gerechnet als CaSO4 zwischen 0.7 Gew.-% und 8 Gew.-% liegt. Ohne signifikante Beeinflussung der Festigkeitsentwicklung können dadurch die Abbindezeiten zwischen 0 und maximal 300 Min. durch die Menge des zugesetzten CaS04 geregelt werden.

Vorzugsweise werden zur Erhöhung der Festigkeit mindestens ein Karbonatdonor und mindestens eine eisenkomplexierende Verbindung eingesetzt. Als Karbonatdonor eignen sich wasserlösliche Salze der Kohlensäure. Als eisenkomplexierende Verbindung kann jede Verbindung eingesetzt werden, die in wässriger Verbindung in alkalischem Milieu (pH > 10) mit Eisen(III) stabile, lösliche Komplexverbindungen eingeht. Besonders bevorzugt sind in diesem Sinn wasserlösliche Salze der Polyoxykarbonsäure oder der Polykarbonsäure oder ein Diketon. Ganz allgemein können als Karbonatdonor bzw. Karbonatgenerator Verbindungen eingesetzt werden, die in alkalischem wässrigen Milieu Karbonationen freisetzen oder mit reaktiven Calciumverbindungen (Portlandit Ca(OH)2, C3A, C3S etc.) zu Calciumkarbonat und/oder Calciumkarbonat enthaltenden Verbindungen reagieren (Karboaluminat 4CaO * CaCO3 * 11H2O, Karboaluminoferrit, Taumasit, Karboaluminosilikat etc.). Kaliumbikarbonat als Karbonatdonor wird vorzugsweise bei einem Halbhydratgehalt von weniger als 20 Gew.-% eingesetzt.

Je grösser der Gehalt von C3A ist, desto geringer sollte der Halbhydratgehalt sein. So sollte z. B. bei einem Anteil von mehr als 8 Gew.-% C3A und einem Anteil von mehr als 0.9 Gew.-% K2O der Halbhydratgehalt weniger als 5 Gew.-% betragen. Bei einem Anteil von mehr als 9 Gew.-% C3A und einem Anteil von mehr als 1 Gew.-% K2O wird ein Halbhydratgehalt von weniger als 1 Gew.-% bevorzugt.

Gemäss einer besonders bevorzugten Ausführungsform wird zur Verkürzung der Abbindezeiten und zur Erhöhung der Früh- und Langzeitfestigkeiten mindestens eine eisenkomplexierende Verbindung in Kombination mit löslichen Karbonaten bzw. löslichen Salzen und Verbindungen der Kohlensäure eingesetzt. Die eisenkomplexierende Verbindung ist dem Bindemittel im trockenen Zustand zuzumischen.

Es hat sich nämlich überraschenderweise gezeigt, dass die Aktivierung der als unreaktiv geltenden Ferritphase in vorteilhafter Weise zur Steuerung bzw. Einstellung der Eigen. schaften des Bindemittels führt. Die Verwendung von eisenkomplexierenden Verbindungen führt also zu verkürzten Abbindezeiten und zu erhöhten Festigkeiten, insbesondere zu erhöhten Frühfestigkeiten. Die erfindungsgemässe Aktivierung der Ferritphase kann vornehmlich bei Klinkern mit einem Ferritanteil von mindestens 4 Gew.-%, vorzugsweise 6 Gew.-% angewendet werden.

Ein bevorzugtes Bindemittel zeichnet sich dadurch aus, dass die Zusatzmittel einen aus dem Klinker bezogenen Anteil von mindestens 3 mMol% einer eisenkomplexierenden Verbindung und einen Karbonatdonor in einem auf die eisenkomplexierende Verbindung bezogenen Molverhältnis zwischen 0.3 und 4 enthalten. Eine mit einem solchen Bindemittel hergestellte Mörtel- oder Betonmischung zeichnet sich durch eine geringe Empfindlichkeit der Eigenschaften gegenüber Aenderungen Wasser/Zement-Verhältnis aus.

Bei geeigneter Wahl des Konzentrationsverhältnisses der Aktivatoren (Karbonatdonor/eisenkomplexierende Verbindung) wird die im allgemeinen als unreaktiv geltende Ferritklinkerphase am schnellsten hydratisiert (nach 24 h zu 100%) und trägt damit wesentlich zur Entwicklung der hohen Früh- und Langzeitfestigkeiten bei.

Typischerweise liegt bei einem erfindungsgemässen Bindemittel das Molverhältnis von Sulfat zu eisenkomplexierender Verbindung in einem Bereich zwischen 1 und 20. Besonders bevorzugt ist ein Molverhältnis zwischen 3 und 8.

Die erwähnte geringe Empfindlichkeit der Eigenschaften gegenüber Aenderungen im Molverhältnis liegt insbesondere dann vor, wenn dieses in einem Bereich zwischen 1 und 3 liegt.

Im Gegensatz zu den bekannten Bindemittelformulierungen nimmt bei der Erfindung der Wasserbedarf mit steigender Mahlfeinheit ab. Aus diesem Grund werden mit Vorteil Portlandzementklinker resp. Portlandzemente in einer Mahlfeinheit nach Blaine von mindestens 4000 cm²/g verwendet. Gute Resultate lassen sich im Bereich von 4500 cm²/g bis 5500 cm²/g erzielen. Es ist daher nicht erforderlich die hochfein gemahlenen (8000 cm²/g und mehr) und daher teuren Portlandzementklinker resp. Portlandzemente zu verwenden.

Vorzugsweise enthalten die Zusatzmittel als Karbonatdonor in Wasser sowohl lösliche als auch wenig bis unlösliche Salze der Kohlensäure. Besonders gut eignen sich Calciumkarbonat, Magnesiumkarbonat und/oder Dolomit. Die wenig bis unlöslichen Salze sind durch Vermahlen und/oder thermisches Behandeln vorgängig aktiviert worden. Die Menge der in Wasser wenig bis unlöslichen Salze liegt vorzugsweise zwischen 2 und 20 Gew.-%.

Vorzugsweise werden als Karbonatdonor wasserlösliche Salze der Kohlensäure, insbesondere Alkalikarbonate und/oder Alkalihydrogenkarbonate, und als eisenkomplexierende Verbindungen wasserlösliche Salze der Polyoxykarbonsäure oder der Polykarbonsäure oder ein Diketon verwendet. Als Karbonatdonor eignet sich Kaliumkarbonat, Kaliumkarbonattrihydrat und Kaliumhydrogenkarbonat. Vorzugsweise werden solche Karbonatdonoren kombiniert mit eisenkomplexierenden Verbindungen wie Trikaliumzitratmonohydrat oder einer Mischung aus Di-Kaliumoxalat-Monohydrat und Trikaliumzitratmonohydrat, wobei der Anteil an Di-Kaliumoxalat-Monohydrat weniger als 50 mMol% beträgt.

Die erfindungsgemässen Eisenkomplexe von Polyoxykarbonsäuren, Polykarbonsäuren und Diketonen haben den Vorteil, dass sie relativ stark sind, insbesondere im Vergleich zu Eisen-Aminkomplexen.

Zitronensäure, eine Polyoxykarbonsäure, ist ein besonders wirksamer Komplexbildner für Eisen. Der Vorteil von Zitrat liegt darin, dass die aktivierende Wirkung durch die Alkaliaktivatoren, insbesondere durch Kaliumkarbonat und Kaliumbikarbonat vervielfacht wird.

Die Aktivierung von Ferrit kann beim Trocknen von Mörtel und Beton zur Bildung unerwünschter brauner Flecken auf der Oberfläche führen. Diese Fleckenbildung kann erfindungsgemäss durch Zusatz von 0.1-1 Gew.-% Oxalsäure resp. deren Alkalisalze, verhindert werden.

Die Zusatzmittel enthalten einen auf den Klinker bezogenen Anteil von mindestens 4.5 mMol%, vorzugsweise mindestens 7.5 mMol% an Kaliumzitrat (K3C6H507 * H2O)

Die Zusatzmittel können einen auf den Klinker bezogenen Anteil von mindestens 11 mMol% an Zitronensäure enthalten.

Der Karbonatanteil liegt gemäss der Erfindung zwischen mindestens 5 mMol% und höchstens 25 mMol%. Damit lassen sich hohe Frühfestigkeiten erreichen. Zur Erzielung einer Langzeitfestigkeit enthalten die Zusatzmittel einen auf den Klinker bezogenen Anteil von mindestens 9 mMol% und höchstens 30 mMol% an Kaliumbikarbonat.

Damit eine mit dem erfindungsgemässen Bindemittel hergestellte Mörtel oder Betonmischung weitgehend unabhängig von der Umgebungstemperatur insbesondere auch bei Temperaturen unterhalb des Gefrierpunktes abbindet, können als Zusatzmittel auch Puzzolanerden, Tonminerale, Flugaschen und/oder feinstverteilte reaktive Silka beigemischt werden.

Ein Mörtel oder Frischbeton gemäss der Erfindung zeichnet sich durch ein hydraulisches Bindemittel der obengenannten Art und einen Wasser/Zement-Wert im Bereich von 0.25-0.4, insbesondere von 0.3-0.37 aus.

Die Erfindung bringt folgende, für die Praxis wesentlichen Vorteile mit sich:
a) hohe Frühfestigkeiten verbunden mit hohen Langzeitfestigkeiten (> 28 d);
b) geringe Empfindlichkeit der Festigkeitsentwicklung, insbesondere der Frühfestigkeiten gegenüber der Portlandzementklinkerzusammensetzung;
c) Unempfindlichkeit der Festigkeitsentwicklung gegenüber der Zusammensetzung der üblichen Beton-Zuschlagstoffe;
d) Geringe Empfindlichkeit der Festigkeitsentwicklung, der Abbindezeiten und der Konsistenz (Verarbeitbarkeit) gegenüber Aenderungen des Wasser/Zement-Verhältnisses (vergleichbar mit gewöhnlichen Portlandzementen);
e) Geringe Empfindlichkeit der Festigkeitsentwicklung, insbesondere der Frühfestigkeiten und der Abbindezeiten gegenüber der Verarbeitungstemperatur;
f) Geringe Porosität und hohe Dauerhaftigkeit
Zu den Vorteilen ist im einzelnen folgendes anzumerken:
Zu a): Die Festigkeitsentwicklung einer Mörtel- oder Frischbetonmischung gemäss der Erfindung zeichnet sich dadurch aus, dass mit der üblichen Verarbeitbarkeit (Ausbreitmass 45-50 cm, Slump 15-20 cm) ca. 30 Min. nach Abbindeende Festigkeiten von typischerweise 19 MPa, mindestens aber 15 MPa erreicht werden können. Dies entspricht ca. 80% der 6 h-Festigkeiten. Nach 28 Tagen liegen die Festigkeiten typischerweise bei ca. 75 MPa. Bei der Verwendung von Bikarbonat können 90 Min. nach Abbindeende analoge Frühfestigkeiten erreicht werden, wobei aber eine geringere Wärmeentwicklung während der Erhärtung auftritt und vergleichsweise höhere Langzeitfestigkeiten von ca. 90 MPa nach 28 Tagen erzielt werden.
   Gemäss der Erfindung werden also die Frühfestigkeitsentwicklung und die Wärmeentwicklung während der Frühphase der Erhärtung über eine einfache Aenderung des Anfangs-pH-Wertes der Bindemittelmischung eingestellt.
   Im Gegensatz zur Erfindung liessen sich bei bekannten aktivierten hochfrühfesten Bindemittel (wie sie z. B. in der US 4,842,649 beschrieben sind) vergleichbare Festigkeiten nur mit weitaus steiferen Betonmischungen erreichen. Gleichzeitig war die hohe Wärmeentwicklung (insbesondere bei der Verwendung von Calciumsulfoaluminat und Calciumfluoraluminatzement) wenig bis gar nicht beeinflussbar.
Zu b): Grundsätzlich lassen sich ausreichende Frühfestigkeiten mit allen normgemässen Portlandzementklinkern mit
   einem minimalen C4AF-Gehalt von 4 Gew.-%, vorzugsweise 6 Gew.-% erreichen. Optimale Frühfestigkeiten ergeben sich mit Klinkern mit mindestens 9,5% C4AF, wobei die Klinkerreaktivität zwar die Abbindezeiten, nicht aber die Festigkeiten beeinflusst.
   Anders als bei der Erfindung hat bei den aus dem Stand der Technik bekannten Bindemitteln die Bindemittelzusammensetzung einen wesentlichen Einfluss auf die Festigkeitsentwicklung, insbesondere auf die Frühfestigkeiten.
Zu c): Die Sieblinie und die Zusammensetzung der Betonzuschlagstoffe beeinflusst zwar wie bei gewöhnlichen Betonmischungen den Wasserbedarf, bei gleicher Konsistenz ist aber die Festigkeitsentwicklung unabhängig von der Art der Zuschlagstoffe. Dies steht im Gegensatz zu den Erfahrungen mit den bisher bekannten, aktivierten, hochfrühfesten Portlandzementen, insbesondere wenn organische Verflüssiger verwendet wurden.
Zu d): Bei der Erfindung reagieren die Frühfestigkeiten (2-4 h) auf Aenderungen des Wasser/Zement-Wertes in etwa so empfindlich wie die 24-48 h-Festigkeiten von gewöhnlichen Portlandzementen. Dasselbe gilt sinngemäss für die Konsistenz und die Abbindezeiten von Frischbeton. Dies bringt gegenüber herkömmlichen hochfrühfesten Bindemitteln den grossen Vorteil mit sich, dass sehr flüssige (Ausbreitmass > 50 cm) bzw. flüssige (Ausbreitmass 45-50 cm) Betonmischungen wie Beton aus gewöhnlichem Portlandzement verarbeitet werden können, ohne dass auf die erfindungsgemässen hohen Frühfestigkeiten verzichtet werden müsste. Die genannten Eigenschaften lassen sich bei der Erfindung mit Wasser/Zementverhältnissen von 0.33-0.36 problemlos realisieren.
   Im Gegensatz zur Erfindung reagieren die Festigkeiten, Abbindezeiten und Konsistenz der bekannten hochfrühfesten Bindemitteln, welche auf Portlandzement, Verflüssigern und Aktivatoren sowie ggf. Zusatzstoffen wie Flugasche, Metakaolin und Mikrosilika beruhen, sehr empfindlich auf Aenderungen des Wasser/Zementverhältnisses. Das für die Erreichung der bekannten charakteristischen Frühfestigkeiten notwendige, niedrige Wasser/Zementverhältnis von 0.20-0.26 bedingt stark tixothropes Verhalten des Frischbetons und schränkt damit dessen Verarbeitbarkeit und Anwendungsbereich stark ein.
zu e): Im Temperaturbereich (Temperatur von Zement, Zuschlagstoffen und Wasser) von 5 °C bis 30 °C ändern sich die Frühfestigkeiten einer erfindungsgemässen Betonmischung nur um ca. 20% und die Abbindezeiten um ca. 50%. Die 24 h-Festigkeiten weisen dieselbe Temperaturempfindlichkeit auf wie ein gewöhnlicher Portlandzement vom Typ P50.
   Im Gegensatz dazu sind die bekannten gewöhnlichen Portlandzemente weitaus empfindlicher gegenüber Temperaturänderungen und zwar sowohl bezüglich Abbindezeiten als auch Festigkeitsentwicklung. In der Regel bewirkt eine Temperaturerniedrigung von 20 °C auf 7 °C eine Verlangsamung der Festigkeitsentwicklung und des Abbindens um einen Faktor 3. Unter den gleichen Bedingungen nehmen bei einem erfindungsgemässen Bindemittel die Abbindezeiten um einen Faktor von ca. 1.3 zu.
zu f): Aufgrund der tiefen Wasser/Zement-Werte (vorzugsweise 0.33-0.36) liegen bei der Erfindung die Porositätswerte im Beton, gemessen nach 7 Tagen deutlich unterhalb denen, die mit Portlandzement ohne Zusatzstoffe nach 28 Tagen erreichbar sind (erfindungsgemäss 6 Vol.-%/g gegenüber 8-18 Vol.-%/g bei Portlandzementen ohne Zusatzstoffe). Dadurch ist die Dauerhaftigkeit (Schwinden, Creep, Frost/Tau-, Frost/Salzbeständigkeit, Sulfatbeständigkeit) des erhärteten Betons deutlich besser als die von bisherigen Betonen mit ähnlichen Wasser/Zement-Werten.

### Kurze Beschreibung der Zeichnungen und der Tabellen

Nachfolgend soll die Erfindung anhand von Ausführungsbeispielen und im Zusammenhang mit den Zeichnungen und Tabellen näher erläutert werden. Es zeigen:
- Fig. 1: eine Darstellung des Einflusses des Halbhydratgehalts auf die Frühfestigkeit eines hydraulischen Bindemittels mit Kaliumkarbonat als zusatzmittel;
- Fig. 2: eine Darstellung des Einflusses des Halbhydratgehalts auf die Abbindezeit eines hydraulischen Bindemittels;
- Fig. 3: eine Darstellung des Einflusses der Temperatur auf die Dehydration von Dihydrat;
- Fig. 4: eine Darstellung des Einflusses der Feuchtigkeit auf die Dehydration von Dihydrat;
- Fig. 5: eine Darstellung der Empfindlichkeit der Eigenschaften des Bindemittels in Abhängigkeit vom Karbonat/Zitrat-Verhältnis;
- Fig. 6: eine Darstellung des Einflusses von Wasser, Karbonatdonor und Kaliumzitrat auf die Druckfestigkeit in Abhängigkeit vom Klinkertyp und vom Karbonatdonor;
- Fig. 7: eine Darstellung der Abhängigkeit der 6 h-Druckfestigkeit vom C4AF-Gehalt bei der Verwendung von Kaliumbikarbonat als Karbonatdonor;
- Fig. 8: eine Darstellung der Abhängigkeit der 6 h-Druckfestigkeit vom C4AF-Gehalt bei der Verwendung von Kaliumkarbonat als Karbonatdonor;
- Fig. 9: eine Darstellung des Zusammenhangs zwischen Gipsgehalt (in Gew.-%) und Abbindezeite (in Min.);
- Fig. 10: eine Darstellung der Festigkeitsentwicklung (Druckfestigkeit in MPa Zeit nach Abbinden in h) für verschieden Dihydratgehalte;
- Fig. 11: eine Darstellung der Abhängigkeit der 4 h-Festigkeit eines erfindungsgemässen Bindemittels vom Wasser/Zement-Verhältnis im Vergleich zur 24 h-Festigkeit eines bekannten zusatzmittelfreien Portlandzementes;
- Fig. 12: eine Darstellung der Abhängigkeit der 4 h und 24 h-Festigkeit vom Wasser/Zement-Wert bei einem erfindungsgemässen Bindemittel im Vergleich zu einem bekannten hochfrühfesten Bindemittel;
- Fig. 13: eine Darstellung der Temperaturabhängigkeit der Frühfestigkeit eines erfindungsgemässen Bindemittels im Vergleich zur 48 h-Festigkeit eines bekannten hochfrühfesten Zementes;
- Fig. 14: eine Darstellung der Abhängigkeit der Fliessfähigkeit (FLOW) vom Wasser/Zement-Wert bei einem erfindungsgemässen Bindemittel im Vergleich zu einem bekannten hochfrühfesten Bindemittel.
- Tab. 1.1-1.3: Eine Zusammenstellung der in den Ausführungsbeispielen verwendeten Klinker und Portlandzemente;
- Tab. 2: Einfluss der Gipsphase und vorteilhafte Wirkung der Zugabe von calciumsulfathaltigen Zusatzmitteln zu gipsfrei vermahlenen Klinkern;
- Tab. 3: Einfluss der Gipszugabe bei der Verwendung von Kaliumkarbonat als Zusatzmittel;
- Tab. 4: Einfluss der Gipszugabe bei der Verwendung von Kaliumhydrogenkarbonat als Zusatzmittel;
- Tab. 5: Einfluss von verschiedenen Calciumsulfatphasen auf die Eigenschaften des Bindemittels;
- Tab. 6: Einfluss von Kaliumzitrat auf das Erhärtungsverhalten von Portlandzement in ISO-Mörtel;
- Tab. 7: Einfluss von Kaliumbikarbonat und Kaliumzitrat auf die Zementhärtung;
- Tab. 8: Einfluss von Alkalikarbonat und Kaliumzitrat auf die Zementhärtung;
- Tab. 9: Ein Beispiel mit den Zusatzmitteln Zitronensäure und Kaliumkarbonat;
- Tab . 10: Hydratation der Klinkerphasen in Abhängigkeit von der Zeit;
- Tab. 11 und 12: Einfluss des Halbhydrats in Gegenwart von Dihydrat auf die Eigenschaften des Bindemittels bei verschiedenen Formulierungen des aktivierenden Zusatzmittels;
- Tab. 13: Eigenschaften von Formulierungen mit verschiedenen Anteilen an Zitrat resp. Zitronensäure;
- Tab. 14: Vergleich von Kaliumkarbonat und Kaliumbikarbonat bei verschiedenen Wasser/Zement-Verhältnissen;
- Tab. 15: gipsfrei gemahlener Klinker mit unterschiedlichen Mengen an Dihydrat und Halbhydrat, wobei die Zusatzmittel einerseits Zitrat und andererseits Zitronensäure je in Kombination mit Kaliumkarbonat enthalten;
- Tab. 16: einige besonders bevorzugte Ausführungsbeispiele;
- Tab. 17: Ausführungsbeispiele mit besonders hohen Frühfestigkeiten;
- Tab. 18: Einfluss der Zugabe von Dikaliumoxalat einerseits in Verbindung mit Kaliumkabronat und andererseits mit Kaliumbikarbonat;
- Tab. 19: Varianz und Vertrauensbereiche der 4 h-Festigkeit von erfindungsgemässen Bindemitteln.

In den Figuren und Tabellen wurden unter anderem folgende Schreibweisen und Abkürzungen verwendet:
- DF: Druckfestigkeit
- w/c: Wasser/Zement-Verhältnis
- CSTR: Druckfestigkeit (engl. Compressive Strength)
- SET: Abbindezeit
- FLOW: Fliessfähigkeit

- DH: Dihydrat
- HH: Halbhydratgehalt
- A: Anhydrit
- A nat.: natürlicher Anhydrit
- A lösl.: löslicher Anhydrit
- CITR.AC: Zitronensäure
- K3C: Tri-Kaliumzitratmonohydrat
- PZ: Portlandzement
- PK: Portlandzementklinker

### Wege zur Ausführung der Erfindung

Wie bereits erwähnt liegt der Kern der Erfindung in der Erkenntnis, dass der Calciumsulfathalbhydratgehalt, im folgenden kurz HH-Gehalt genannt, einen wesentlichen und in der Art seinen Auswirkungen unerwarteten Einfluss auf die verschiedenen Eigenschaften wie Wasserbedarf, Verarbeitbarkeit, Abbindezeit und Frühfestigkeit eines hydraulischen Bindemittels resp. der damit hergestellten Mörtel- oder Betonmischung hat.

Für die praktische Anwendung besonders bedeutsam ist ferner die Erkenntnis, dass die Empfindlichkeit der Eigenschaften des Bindemittels auf Aenderungen der Parameter wie z. B. Klinkerqualität, Klinkerzusammensetzung, Wasser/Zement-Verhältnis und Verarbeitungstemperatur zu einem wesentlichen Teil durch den HH-Gehalt bestimmt wird. So hat es sich beispielsweise gezeigt, dass die Abbindezeiten in Gegenwart grösserer Mengen von Halbhydrat sehr empfindlich auf Parameteränderungen reagieren. Wird also ein Bindemittel auf der Basis von komerziell erhältlichen, in ihrem HH-Gehalt unspezifizierten resp. unspezifizierbaren (!) Portlandzementen mit Zusatzmitteln zur Einstellung der relevanten Parameter wie Abbindezeit, Frühfestigkeit etc. versehen, dann führt dies zu mehr oder weniger zufälligen Ergebnissen.

Mit anderen Worten: Wenn der HH-Gehalt bei der Herstellung des Bindemittels, insbesondere bei der Auswahl und der Bemessung der Zusatzmittel unberücksichtigt bleibt, dann führt dies im Prinzip zu zufälligen Eigenschaften des Produktes. Wenn dagegen der HH-Gehalt gemäss der Erfindung beachtet wird, dann lassen sich Bindemittel mit reproduzierbaren Eigenschaften herstellen. In einem gewissen Sinn werden durch die Kontrolle des HH-Gehalts die "Trefferwahrscheinlichkeit" und die "Varianz" der durch Zusatzmittel eingestellten Eigenschaften im Vergleich zum Stand der Technik beträchtlich verbessert resp. reduziert.

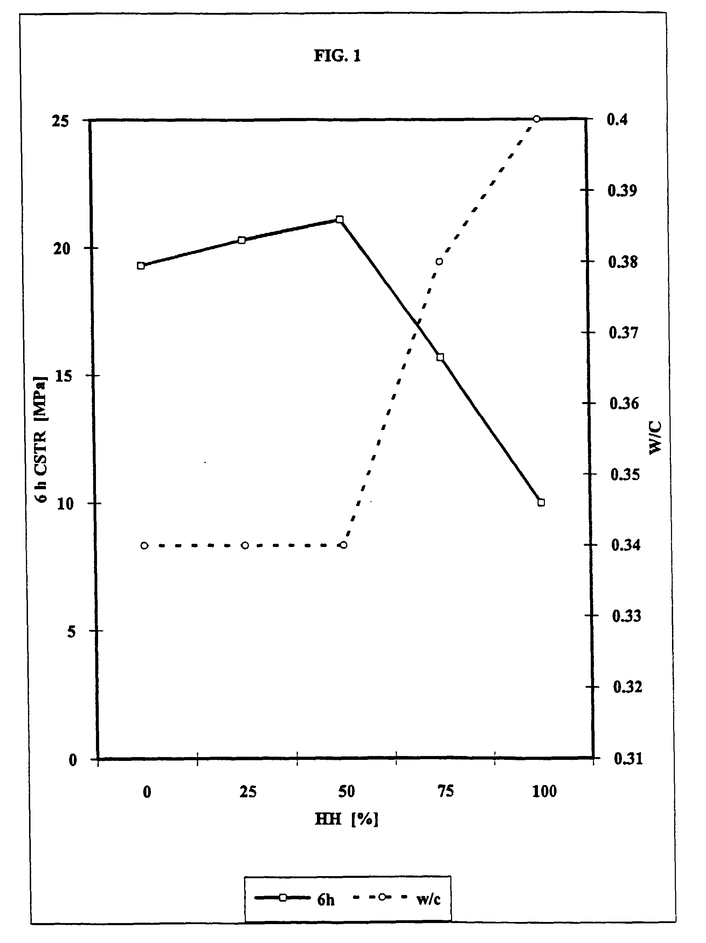

Fig. 1 veranschaulicht das oben Gesagte an einem Beispiel. In der Darstellung ist auf der Abszisse der HH-Gehalt in Prozenten (gerechnet als Dihydrat) und auf der Ordinate einerseits (links) die 6h Frühfestigkeit und andererseits (rechts) das Wasser/Zement-Verhältnis bei konstanter Fliessfähigkeit (FLOW) aufgetragen. Das auf einem Portlandzementklinker beruhende Bindemittel enthielt 6 Gew.-% Gips und wurde aktiviert mit 1.85 Gew.-% K2CO3 und 2.7 Gew.-% K3C.

Aus der Darstellung ist zu entnehmen, dass (bei konstanter Fliessfähigkeit) einerseits das Wasser/Zement-Verhältnis stark ansteigt und andererseits die Frühfestigkeit stark abnimmt, sobald der HH-Gehalt mehr als 50% beträgt. Wenn umgekehrt das Wasser/Zement-Verhältnis konstant gehalten würde, dann würde die Fliessfähigkeit bei einem HH-Gehalt von mehr als 50% entsprechend abnehmen.

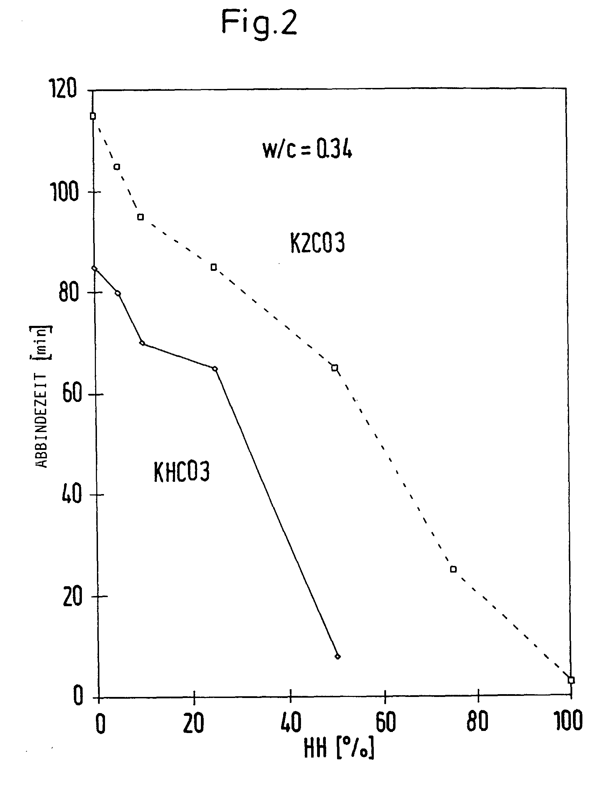

Fig. 2 zeigt eine Darstellung des Einflusses des Halbhydratgehalts auf die Abbindezeit eines hydraulischen Bindemittels. Auf der Abszisse ist der HH-Gehalt in Gew.-% (gerechnet als Dihydrat) und auf der Ordinate die Abbindezeit in Minuten angegeben. Die Messwerte beziehen sich auf einen Portlandzementklinker (Typ PK1/5), der gipsfrei auf eine Feinheit Blaine 5000 cm²/g vermahlen wurde und dem als calciumsulfathaltiges Zusatzmittel 5 Gew.-% einer Mischung unterschiedlichen Anteilen an Dihydrat und Halbhydrat zugegeben wurde. Das aktivierende Zusatzmittel (4.6 Gew.-%) enthielt 41% Kaliumkarbonat (K2CO3) und 59% Kaliumzitratmonohydrat.

Die Darstellung zeigt, dass bei der in genannter Weise aktivierten Bindemittelmischung die Abbindezeit bei hohem HH-Gehalt stark abnimmt, wobei im schlimmsten Fall ein Abbinden beim Mischen der Mörtelmasse stattfindet (FLASH SET).

Es ist deutlich zu erkennen, dass bei einem Halbhydratgehalt von als mehr 50% (gerechnet als Dihydrat) bei der obenerwähnten Mischung (K2CO3) die Abbindezeit unerwünscht stark reduziert ist. Mit demselben Klinker und einem aktivierenden Zusatzmittel enthaltend 43 Gew.-% Kaliumbikarbonat (KHCO3) und 57 Gew.-% Kaliumzitratmonohydrat tritt die übermässig starke Reduktion bei einem Halbhydratgehalt von mehr als 20% auf.

Die anhand der Figuren 1 und 2 beispielhaft erläuterten Untersuchungen machen also deutlich, dass die Eigenschaften eines hydraulischen Bindemittels mit Hilfe von aktivierenden Additiven nur dann zuverlässig eingestellt werden können, wenn der HH-Gehalt des Bindemittels bekannt resp. spezifiziert ist. Abhängig vom (maximalen) HH-Gehalt sind die Zusatzmittel auszuwählen und zu bemessen.

In der Regel genügt es, wenn der maximale HH-Gehalt im Bindemittel einen vorbestimmten Wert nicht überschreitet. Wie aus den Fig. 1 bis 3 zu entnehmen ist, beträgt dieser beim Kaliumbarbonat vorzugsweise etwa 50% und beim Kaliumbikarbonat vorzugsweise ca. 20%. In den meisten Fällen wirkt sich ein geringer HH-Gehalt positiv auf die Reproduzierbarkeit und zugunsten einer geringen Empfindlichkeit (gegenüber Parameteränderungen) aus.

Generell kann deshalb gesagt werden, dass das hydraulische Bindemittel vorzugsweise einen möglichst geringen HH-Gehalt aufweisen sollte. Es stellt sich daher die Frage, wie der HH-Gehalt kontrolliert werden kann.

Zunächst ist festzustellen, dass das Calciumsulfathalbhydrat (CaSO4 * 0.5H2O) bei der Herstellung von Zement durch die Dehydration des Gipses (= Dihydrat = CaSO4 * 2H2O) während des Vermahlens des Klinkers mit dem Gips entsteht. In gewöhnlichen, normgemäss hergestellten Portlandzementen liegt nun die Calciumsulfatphase je nach Mahlbedingungen (Temperatur, Feuchtigkeit) in variierenden Mengen als Halbhydrat vor. Der HH-Gehalt ist insbesondere dann hoch, wenn auf hohe Mahlfeinheit gemahlen wird (was bei gewöhnlichen, d. h. nicht aktivierten Zementen durchaus erwünscht ist).

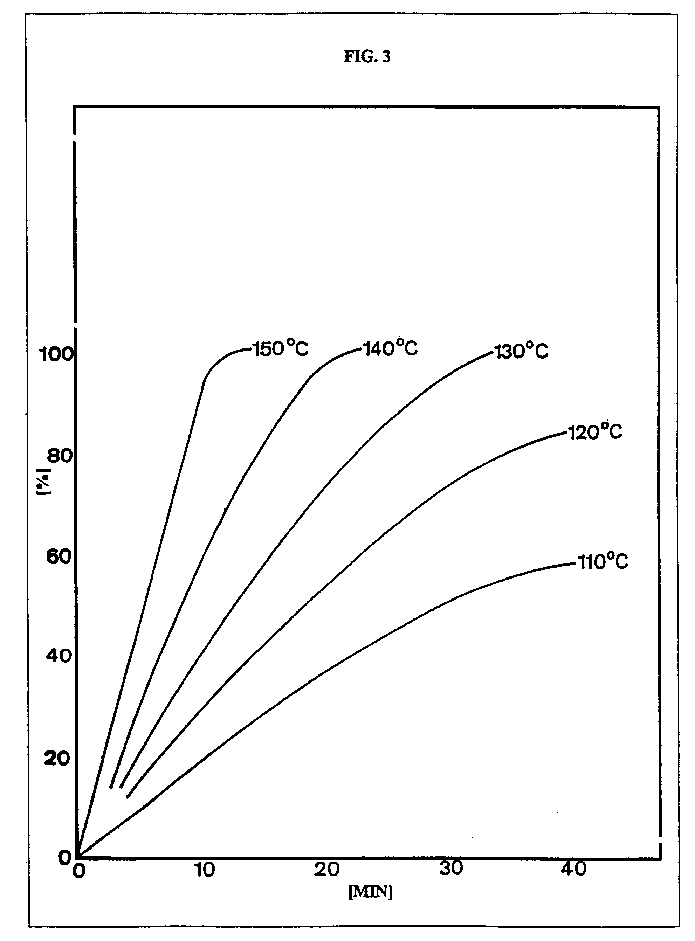

Fig. 3 zeigt den (an sich bekannten) Einfluss der Temperatur auf die Dehydration von Gips. Auf der Abszisse ist die Zeit, während der Gips einer bestimmten Temperatur ausgesetzt worden ist, in Minuten aufgetragen und auf der Ordinate die Dehydration in Prozenten. Aus der Grafik ergibt sich, dass Gips, der während 30 Min. einer Temperatur von 130 °C ausgesetzt worden ist, beinahe zu 100% in Calciumsulfathalbhydrat umgewandelt worden ist. Bei 110 °C werden in der selben Zeit dagegen nur gut 50% dehydratisiert.

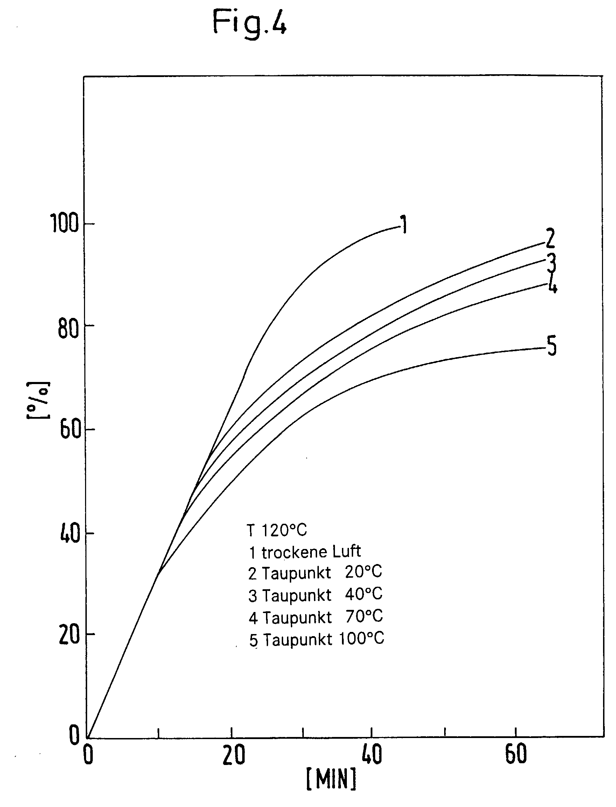

Fig. 4 zeigt den (ebenfalls an sich bekannten) Einfluss der Feuchtigkeit auf die Dehydration von Dihydrat. Wie in Fig. 4 ist die Dehydration in Prozenten gegenüber der Wirkzeit (in Minuten) aufgetragen. Aus der Darstellung ist zu entnehmen, dass bei einer Temperatur von z. B. 120° und einer Wirkzeit von ca. 30 Min. je nach dem Feuchtigkeitsgehalt (definiert durch den Taupunkt) der Luft zwischen 60% und 90% schwankt.

Bei den allgemein bekannten Verfahren zur Herstellung von Portlandzement schwankt die Mahltemperatur typischerweise zwischen 100 und 160 °C. Beim Einschalten der Mühle wird dabei die Temperatur niedriger sein als im Dauerbetrieb. Auch die Verweilzeit in der Mühle variiert. Schliesslich wirkt sich auch die Temperatur und Feuchtigkeit der Luft aus, die zum Ausblasen des Feinkornanteils im Sichter verwendet wird. All das führt dazu, dass beim handelsüblichen Portlandzement der HH-Gehalt völlig undefiniert ist.

Es ist dabei anzumerken, dass bei zusatzmittelfreien Portlandzementen ein hoher Halbhydratgehalt durchaus erwünscht ist. Nach allgemein anerkannter Lehre besteht nämlich ein direkter Zusammenhang zwischen einem hohen Halbhydratgehalt und grosser Festigkeit (vgl. z. B. Materials Science of Concrete I, Jan P. Skalny, The American Ceramic Society, Inc., Westerville, 1990, Seiten 32, 33, oder Cement Chemistry, H.F.W. Taylor, Academic Press, London, 1990, Abschnitt 7.6.2).

Um nun gemäss der Erfindung einen Portlandzement mit spezifiziertem HH-Gehalt herzustellen, wird Portlandzementklinker zusammen mit einer gegebenen Menge an Dihydrat vermahlen, wobei die Prozesstemperatur und/oder die Feuchtigkeit so eingestellt wird, dass der Calciumsulfathalbhydratgehalt des erzeugten Portlandzementes einen vorbestimmten Wert nicht überschreitet. Vorzugsweise wird der HH-Gehalt in bestimmten (regelmässigen oder unregelmässigen) Zeitabständen gemessen und bei zu hohem HH-Gehalt die Temperatur (sei es durch Kühlung der Mühle durch Einspritzen von Wasser oder durch Einblasen kalter Luft in den Sichter) reduziert. Wahlweise kann auch der Einfluss der Luftfeuchtigkeit auf die Dehydration zur Einstellung des HH-Gehalts ausgenutzt werden.

Vorzugsweise werden die Parameter des Mahlprozesses so eingestellt, dass der HH-Gehalt unmittelbar nach dem Vermahlen bei höchstens 50%, insbesondere bei höchstens 20% liegt.

Eine andere, ebenfalls im Rahmen der Erfindung liegende Möglichkeit zur Kontrolle des maximalen HH-Gehalts besteht darin, dass Portlandzementklinker zusammen mit einem gegebenen Mengenverhältnis an Dihydrat und Anhydrit vermahlen wird, so dass der Calciumsulfathalbhydratgehalt des erzeugten Portlandzementes einen vorbestimmten Wert nicht überschreitet.

Ein maximaler HH-Gehalt von beispielsweise 50% im Portlandzement kann also dadurch garantiert werden, dass der Portlandzementklinker mit einer Mischung aus 50% Dihydrat und 50% Anhydrit vermahlen wird. Weil Halbhydrat nur aus dem Dihydrat entstehen kann, kann der maximale Anteil an Halbhydrat nicht grösser als der maximale Anteil an Dihydrat (im vorliegenden Beispiel 50%) sein.

Zur Erniedrigung des HH-Gehalts des Portlandzementes resp. des hydraulischen Bindemittels kann auch nachträglich separat gemahlener Gips und/oder Anhydrit zugemischt werden.

Es hat sich gezeigt, dass Bindemittel, die ausschliesslich Dihydrat enthalten, vergleichsweise unempfindlich gegenüber Aenderungen der für das Bindemittel charakteristischen Parameter ist. Dies gilt auch, in etwas geringerem Ausmass für Anhydrit.

Es entspricht deshalb einer besonders bevorzugten Ausführungsform der Erfindung, für das Bindemittel gipsfrei vermahlenen Portlandzementklinker zu verwenden und nachträglich Gips- und/oder Anhydrit zuzumischen. Die Entstehung von Halbhydrat (und sei es auch nur in einem kontrollierten Ausmass) wird von Anfang an unterbunden. Die durch die Abwesenheit von Halbhydrat erzielbaren Vorteile sind durch die Figuren 1 und 2 eindrücklich belegt worden.

Es sind nun verschiedene Verfahren zur Herstellung von Portlandzementen mit spezifiziertem Halbhydratgehalt beschrieben worden. Es ist dabei anzumerken, dass der Halbhydratgehalt nicht eine konstante Grösse ist. Er kann sich aufgrund der Art der Lagerung des Erzeugnisses im Laufe der Zeit verändern. Sinnvollerweise ist daher der Halbhydratgehalt auf einen bestimmten Zeitpunkt zu beziehen. Wenn es um die Herstellung eines erfindungsgemäss verwendbaren Portlandzementes geht, dann bezieht sich der Halbhydratgehalt auf den Zeitpunkt unmittelbar nach der Herstellung des Zementes. Wenn es um die Herstellung des Bindemittels selbst geht, dann ist der relevante Zeitpunkt durch den Abschluss des Mischprozesses bestimmt.

Der HH-Gehalt kann mit bekannten Methoden (vgl. z. B. V. Schlichenmaier, Thermochimica Akta 11, 1975, pp 334-338) gemessen werden. Entsprechende Geräte sind im Handel erhältlich.

Im Verlauf der Zeit wird sich in der Regel der Halbhydratgehalt des Bindemittels ändern. Einerseits wandeln sich nämlich sowohl Dihydrat als auch Halbhydrat in Anhydrit um. Andererseits reagiert das Halbhydrat auch mit Kaliumsulfat zu Syngenit.

Auch die Zusatzmittel (Aktivatoren) gehen mit der Zeit unerwünschte Reaktionen ein. Von daher bringt es nichts, ein Bindemittel solange unter "geeigneten" Bedingungen zu lagern, bis der Halbhydratgehalt vernachlässigbar klein geworden ist. Vielmehr sollten die erfindungsgemässen Bindemittel möglichst frisch eingesetzt werden.

Im folgenden wird nun auf die diversen, bevorzugten Additive eingegangen. Die Basis für ein erfindungsgemässes Bindemittel bildet ein vermahlener Klinker mit einem Ferritanteil von mindestens 4 Gew.-%, vorzugsweise ein vermahlener Portlandzementklinker, und ein calciumsulfathaltiges Zusatzmittel, das entweder zusammen mit dem Klinker oder separat vermahlen worden ist. Der Zement oder der mit dem gipsfrei vermahlenen Klinker vermischte Gips machen 80-95 Gew.-% des Bindemittels aus. Die restlichen Gewichtsanteile werden durch die erfindungsgemässen Aktivatoren gestellt.

Gemäss der Erfindung ist es nun von Vorteil, wenn beim Untermischen der Aktivatoren 120 °C, insbesondere 70 °C nicht überschritten werden. Je nach Bindemittelzusammensetzung können nämlich überhöhte Temperaturen zu unerwünschten Nebeneffekten (wie z. B. unkontrollierte Variation der Abbindezeiten) führen.

Gemäss einer besonders bevorzugten Ausführungsform der Erfindung werden als Aktivatoren Zusatzmittel verwendet, die einerseits lösliche Salze der Kohlensäure enthalten und andererseits eisenkomplexierende, vorzugsweise pH-neutrale bis basische Verbindungen. Mit diesen Mitteln werden einerseits die Festigkeiten, insbesondere die Frühfestigkeiten, und andererseits die Abbindezeiten eingestellt. Die eisenkomplexierende Verbindung (z. B. Kaliumzitratmonohydrat) wirkt dabei überraschenderweise nicht als Verzögerer sondern als Aktivator, d. h. sie beschleunigt den Abbindevorgang und erhöht die Festigkeit.

Mit Vorteil wird die eisenkomplexierende Verbindung in einer Menge von mindestens 3 mMol% (bezogen auf den Klinker) zugesetzt. Die als Karbonatdonor wirkenden löslichen Salze der Kohlensäure (z. B. Kaliumkarbonat) werden in einem auf die eisenkomplexierende Verbindung bezogenen Molverhältnis zwischen 0.3 und 4 zugegeben. Durch die erfindungsgemässe Wahl des Molverhältnisses ergeben sich vorteilhafte Eigenschaften, die im folgenden anhand eines Beispiels erläutert werden sollen.

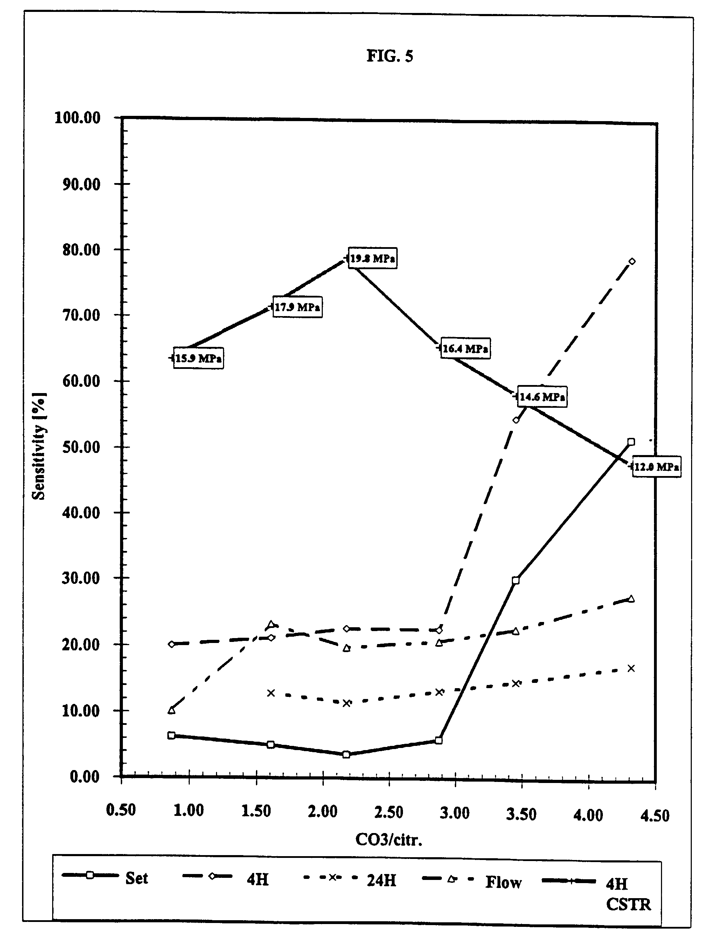

Fig. 5 veranschaulicht die Empfindlichkeit verschiedener Parameter gegenüber Aenderungen im Wasser/Zement-Wert (um 9%) in Abhängigkeit vom Verhältnis Karbonat zu Zitrat. Während die Fliessfähigkeit (FLOW), die 6 h- und die 24 h-Festigkeiten im Bereich zwischen 1.5 und 4.5 (Molverhältnis) nur schwach sensitiv sind, nimmt die Empfindlichkeit der 4 h-Festigkeit und der Abbindezeit (SET) mit dem Molverhältnis stark zu, bei Karbonat/Zitrat-Werten von grösser als 3 bis 3.5. Mit anderen Worten: Wenn bei dem der Darstellung zugrunde liegenden Ausführungsbeispiel das Karbonat/Zitratverhältnis kleiner als 3 gewählt wird, dann sind die beschriebenen Eigenschaften weitgehend unempfindlich gegenüber Aenderungen des Wasser/Zement-Verhältnisses.

Die durch die Fig. 5 gemachte qualitative Aussage, nämlich die Existenz eines Molverhältnisbereiches, in dem die Eigenschaften unempfindliche gegenüber Parameteränderungen sind, trifft für alle erfindungsgemässen Aktivatoren zu. In quantitativer Hinsicht, d. h. wo genau die Grenzen liegen, können zwischen den verschiedenen Aktivatorkombinationen Unterschiede bestehen. So kann es sein, dass für gewisse Aktivatorkombinationen der angestrebte Effekt bereits bei Molverhältnisse kleiner 4 eintritt, während dies bei anderen erst unterhalb von 3 der Fall ist.

Die vorteilhaftesten Ergebnisse bezüglich Festigkeitsentwicklung, Verarbeitbarkeit und Empfindlichkeit werden mit einem erfindungsgemässen Bindemittel dann erzielt, wenn 80-95 Teile Portlandzementklinker mit einem calciumsulfathaltigen Zusatzmittel und einem effektiv festigkeitserhöhenden Zusatzmittel in trockenem Zustand vermischt werden. der Portlandzementklinker ist dabei ohne Gipszusatz auf eine Feinheit von 4000-6000 cm²/g vorzugsweise auf ca. 5000 cm²/g nach Blaine gemahlen.

Das calciumsulfathaltige Zusatzmittel enthält Gips (CaSO4 * 2H2O) und/oder Anhydrit (CaSO4). Es wird durch Vermahlen von Gips- und/oder Anhydrit, ggf. mit Kalkstein und/oder anderen inerten Zusatzstoffen auf Korngrössen kleiner 120 µ vorzugsweise kleiner 60 µ und 90% grösser 2 µ hergestellt. Das Vermahlen des calciumsulfathaltigen Zusatzmittels kann in einer üblichen, offenen Kugelmühle, in einer Walzenschüsselmühle, in einer Mikrowirbelmühle oder in anderer Weise erfolgen. Die Mahl temperaturen und die Lagerungstemperatur sollten unterhalb der Bildungstemperatur von Halbhydrat liegen (kleiner 70-80 °C).

Als calciumsulfathaltige Zusätze können z. B. auch Reststoffe der chemischen Industrie (Zitrogips, Phosphogips, Gips aus der Titandioxidaufbereitung etc.) oder Reststoffe aus der Rauchgasentschwefelung verwendet werden. Falls diese Zusätze in der geforderten Feinheit anfallen, können sie direkt zugesetzt werden. Anderenfalls sind sie wie oben beschrieben zu mahlen.

Das calciumsulfathaltige Zusatzmittel wird in einer Menge zugegeben, dass das Bindemittel 0.7-8 Gew.-% Gips und/oder Anhydrit (gerechnet als CaSO4) enthält. Mit diesem Zusatzmittel wird die Abbindezeit auf einen gewissen Grundwert zwischen 0 und 300 Min. eingestellt. Die Festigkeitsentwicklung wird dadurch nicht signifikant beeinflusst.

Das effektiv festigkeitserhöhende Zusatzmittel enthält mindestens eine eisenkomplexierende Verbindung und mindestens einen Karbonatsdonor resp. Karbonatgenerator.

Als eisenkomplexierende Verbindung kann jede Verbindung eingesetzt werden, die in wässriger Lösung in alkalischem Milieu (pH > 10) mit Eisen(III) stabile, lösliche Komplexverbindungen eingeht. Dazu gehören die Vertreter der Polyoxykarbonsäuren wie Zitronensäure, Weinsäure, Milchsäure, Glukonsäure, Apfelsäure etc. und deren Salze. Ebenso Vertreter der Polykarbonsäuren wie Oxalsäure, Maleinsäure, Malonsäure, Bernsteinsäure etc. und deren Salze. Schliesslich kommen auch Vertreter von Diketonen wie Benztraubensäure, Acetylacetoacetat, Dimethyl-Acethylsuccinat etc. und deren Salze in Frage. Im Prinzip können auch Hydrochinolin-, Amin-, Pyridin-, Glyoxim- und ähnliche Verbindungen verwendet werden. Letztere sind wegen gewissen Nachteilen wie Toxizität, Geruch oder Kosten weniger bevorzugt.

Besonders bevorzugte Eigenschaften werden z. B. mit den Salzen der Zitronensäure erzielt, insbesondere mit Tri-Kaliumzitratmononhydrat (K3C), wobei letztere teilweise durch eine Polykarbonsäure, wie z. B. Oxalsäure und/oder Kaliumoxalat ersetzt werden kann.

Als Karbonatdonor bzw. -generator können Verbindungen eingesetzt werden, die in alkalischem wässerigem Milieu Karbonationen freisetzen resp. mit reaktiven Calciumverbindungen wie Portlandit Ca(OH)2, C3A, C3S etc. zu Calciumkarbonat und/oder Calciumkarbonat enthaltenden Verbindungen reagieren, wie z. B. Karboaluminaten 4CaO * CaCO3 * 11H2O, Karboalumoferriten, Taumasit, Karboaluminosilikaten etc.

Als Karbonatdonor wirken lösliche Salze der Kohlensäure, wie Alkalikarbonate MCO3 und/oder Alkalihydrogenkarbonate MHCO3 (M = Li, Na, K), aber auch Tetralkylamoniumkarbonate. Als Karbonatgenerator wirken solche Verbindungen, die in wässerigen Medien Kohlendioxyd und/oder Karbonat freisetzen wie z. B. Verbindungen der Carbaminsäure.

Zur Erhöhung der Lagerungsstabilität kann auch Kaliumkarbonattrihydrat 2K2CO3 * 3H2O eingesetzt werden.

Das effektive festigkeitserhöhende Zusatzmittel wird durch Vermischen seiner Komponenten, vorzugsweise in Pulverform, ggf. mit Füllstoffen und/oder anderen festigkeitserhöhenden Zusatzmitteln (wie z. B. Mikrosilika, Alkalisilikaten etc.) hergestellt. Die Komponenten des festigkeitserhöhenden Zusatzmittels können dem Bindemittel jedoch auch einzeln zugesetzt werden.

Das festigkeitserhöhende Zusatzmittel wird in der Menge so bemessen, dass das Bindemittelgemisch 3-12 mMol% eisenkomplexierende Verbindungen (z. B. 0.1-4 Gew.-% Kaliumzitratmonohydrat) und 1-40 mMol% Karbonatdonoren (z. B. 0.1-4 Gew.-% Kaliumhydrogenkarbonat) enthält.

Vorteilhafte Ergebnisse werden auch durch Zusatz von 0-10 Gew.-% von schwer- bis unlöslichen Karbonaten wie z. B. Calciumkarbonat erzielt. Die erwähnten Karbonate können getrennt oder gemeinsam mit den jeweiligen Zusatzmitteln als deren Bestandteil oder durch gemeinsames Vermahlen mit dem Portlandzementklinker erfolgen.

Das erfindungsgemässe hydraulische Bindemittel wird vorzugsweise durch Vermischen seiner Komponenten in einem gängigen Trockenmischer hergestellt. Wie bereits erwähnt sollte die Temperatur beim Mischen 120 °C oder vorzugsweise 70 °C nicht überschreiten.

Durch die nachfolgenden Einzelbeispiele und Vergleichsversuche sollen die vorteilhaften Eigenschaften der Erfindung veranschaulicht werden.

In den Tabellen 1.1, 1.2, 1.3 sind die elementaren Zusammensetzungen der in den Beispielen verwendeten Klinker und Zemente (gerechnet als Oxide) und die entsprechenden Klinkerphasenzusammensetzungen, berechnet nach Bogue (ASTM C150 modifiziert), angeführt.

Tabelle 2 zeigt den Einfluss der Gipsphase (insbesondere die vorteilhafte Wirkung der Zugabe des calciumsulfathaltigen Zusatzmittels) auf hochfrühfeste Portlandzement-Formulierungen. Als Alkaliaktivator wurden 2 Gew.-% K2CO3 und als Retarder 0.3 Gew.-% Zitronensäure zugesetzt. In der Tabelle 2 werden gipsfrei gemahlener Klinker versetzt mit Dihydrat verglichen mit den entsprechenden kommerziellen Portlandzementen (DH = Dihydrat, A = Anhydrit, HH = Halbhydrat, DF = Druckfestigkeit).

Aus der Tabelle 2 ist ersichtlich, dass die Zugabe des effektiv aktivierenden Zusatzmittels (Alkaliaktivator und Retarder enthaltend) zu gipsfrei vermahlenen Portlandzementklinker (PZK), vermischt mit Dihydrat, bezüglich Festigkeiten (6 h DF, 24 h DF), Wasserbedarf (W/C) und bezüglich Empfindlichkeiten, sowohl der Festigkeiten als auch der Abbindezeiten (SET), gegenüber der Aktivierung des entsprechenden Portlandzements (PZ) eindeutig Vorteile mit sich bringt.

Das halbhydratfreie Bindemittel (beruhend auf gipsfrei vermahlenem Klinker) ist durch einen tieferen Wasserbedarf (ca. 10%), längere Abbindezeiten (35%), höhere Früh- (35%) und höhere Langzeitfestigkeiten (5-17%) gekennzeichnet.

Ausserdem ist die Empfindlichkeit der Abbindezeiten gegenüber Aenderungen des Wasser-/Zement-Verhältnisses deutlich geringer (34%).

Die Tabellen 3 und 4 illustrieren den Einfluss der Gipszugabe auf die Eigenschaften des erfindungsgemässen Bindemittels anhand des Vergleichs von kommerziellen Portlandzementen mit den entsprechenden gipsfrei gemahlenen Portlandzementklinkern, welche mit Gips vermischt worden sind. Die Portlandzementklinker und falls nötig auch die kommerziellen Portlandzemente wurden auf Blaine 5000 cm²/g gemahlen. Als Aktivatoren wurden Kaliumzitratmonohydrat (eisenkomplexierende Verbindung) und Kaliumkarbonat (Tabelle 3) resp. Kaliumhydrogenkarbonat (Tabelle 4) zur Erhöhung der Festigkeit verwendet. Erfindungsgemäss gipsfrei vermahlene Portlandzementklinker, versetzt mit Dihydrat, wurden mit den entsprechenden Portlandzementen in ISO-Mörtelmischungen verglichen.

Die in der Tabelle 3 aufgeführten Beispiele enthielten als Aktivator Kaliumkarbonat (K2CO3) in unterschiedlichen Mengen von 24-40 Gew.-% und Kaliumzitratmonohydrat in Mengen von 48-49 Gew.-%. Der ersten Vergleichsserie (Zeilen 1-5) liegt ein verhältnismässig reaktiver Portlandzementklinker zugrunde. In den restlichen Vergleichsversuchen (Zeilen 6-17) wurden Portlandzemente mit HH-Gehalten von weniger als 50% verwendet.

Tabelle 4 zeigt Beispiele für aktivierende Zusatzmittel, deren Anteil an Kaliumbikarbonat (KHCO3) je nach Beispiel zwischen 54 und 75 Gew.-% und deren Anteil an Kaliumzitratmonohydrat Werte im Bereich zwischen 25 und 57 Gew.-% annehmen.

Die in den beiden Tabellen 3 und 4 zusammengestellten Resultate zeigen, dass Bindemittelformulierungen, hergestellt aus gipsfrei gemahlenen Klinkern unterschiedlichster Reaktivität, in ISO-Mörtelmischungen vergleichbarer Konsistenz (FLOW) in einem relativ engen Bereich von 80-135 Min. abbinden. Sie weisen 6 h-Festigkeitswerte von 15-23 MPa und 24 h-Festigkeitswerte von 36-51 MPa auf. Bei den entsprechenden, aus Portlandzementen hergestellte Bindemitteln schwanken die Abbindezeiten enorm (4-620 Min.). Aus der Sicht des Anwenders sind solche Variationen nicht tolerierbar. Bei den aus Portlandzementen hergestellten Bindemitteln schwankt auch die Festigkeitsentwicklung stärker.

Bei Bindemitteln, die wenig bis gar kein Halbhydrat enthalten, hat somit der Klinkertyp und die Klinkerreaktivität nur einen mässigen Einfluss auf die relevanten Eigenschaften. Dies steht im Gegensatz zu den Ergebnissen, die auf Bindemitteln mit einem hohen Anteil an Halbhydrat basieren. Am deutlichsten ist dieser Effekt im Vergleich von PK9/1 mit PZ9/1-PZ9/3 (Tabelle 3) ersichtlich. Die Resultate zeigen, dass produktionsbedingte Schwankungen des Halbhydratgehalts Schwankungen bei den Abbindezeiten von 4 Min. (Abbinden im Mischer) bis 620 Min. (unbrauchbar als hochfrühfestes Bindemittel) bewirken können. Die kaliumhydrogenkarbonathaltigen Formulierungen (Tabelle 4) sind ihrerseits enormen Schwankungen der Frühfestigkeiten unterworfen.

Die Wirkung des Halbhydratgehaltes wird vom Klinkertyp beeinflusst: Bei Klinkern mit hohen C3A-Gehalten (> 10%) wie PK9/1-3, PK4/2, PK5/2, bewirkt das Halbhydrat eine Vervielfachung der Abbindezeiten. In wenig reaktiven Klinkern, wie z. B. PK1/1-5, mit einem C3A-Gehalt von < 10% bewirkt der Halbhydratgehalt eine Verkürzung der Abbindezeiten.

Die Abbindezeiten, die Konsistenz, die Frühfestigkeiten und/ oder die 24 h-Festigkeiten reagieren in Bindemitteln, deren Halbhydratgehalt > 20% ist deutlich empfindlicher auf Aenderungen des Wasser-/Zementwertes als Bindemittel, die kein oder nur wenig (ca. 20%) Halbhydrat enthalten. Bindemittelformulierungen, die Kaliumhydrogenkarbonat enthalten, reagieren ausserdem empfindlicher als kaliumkarbonathaltige.

Erfindungsgemässe Bindemittelmischungen, die überwiegend unlöslichen Anhydrit und wenig (< 20%) Halbhydrat enthalten, sind weitgehend unempfindlich gegenüber Variationen der Parameter und entsprechen in ihrem Verhalten im wesentlichen Bindemittelformulierungen, die gipsfreien Klinker und Dihydrat enthalten. Anhydrithaltige Formulierungen binden jedoch schneller ab.

Tabelle 5 illustriert den Einfluss von verschiedenen Calciumsulfatphasen, (Dihydrat alpha-Halbhydrat, β-Halbhydrat, Anhydrit unlöslich, Anhydrit löslich) auf die Eigenschaften des Bindemittels. Der Klinker (PK5/2) wurde gipsfrei vermahlen auf die Feinheit 5000 cm²/g nach Blaine. Es wurden 3 Gew.-% Aktivator zugegeben. Er bestand zu 66% aus K2CO3 und zu 33% aus Kaliumzitratmonohydrat.

Die Vergleiche zeigen, dass Bindemittel, die auf reduktiven Klinker (PK5/2) basieren (C3S-Gehalt von 56% und C3A von 10,5%) mit Dihydrat die weitaus günstigsten Eigenschaften bezüglich Abbindezeit und Festigkeitsentwicklung zeigen.

Hochreaktive Klinker, wie z. B. PK9/2 (61% C3S und 10.4% C3A), reagieren empfindlicher auf den Sulfatträger als unreaktive Klinker. Mit Anhydrit sind die Abbindezeiten generell signifikant kürzer als mit Dihydrat. Sie können jedoch durch nachträgliche Zugabe von Dihydrat zudem mit Anhydrit gemahlenen Portlandzement verlängert werden. Die auf den drei unteren Zeilen der Tabelle 5 angegebenen Bindemittel sind wegen fehlender Frühfestigkeit unbrauchbar.

Sie enthalten nämlich zu viele schnell lösliche CaSO4-Phasen und entsprechen von daher eindeutig nicht den Formulierungsprinzipien der Erfindung.

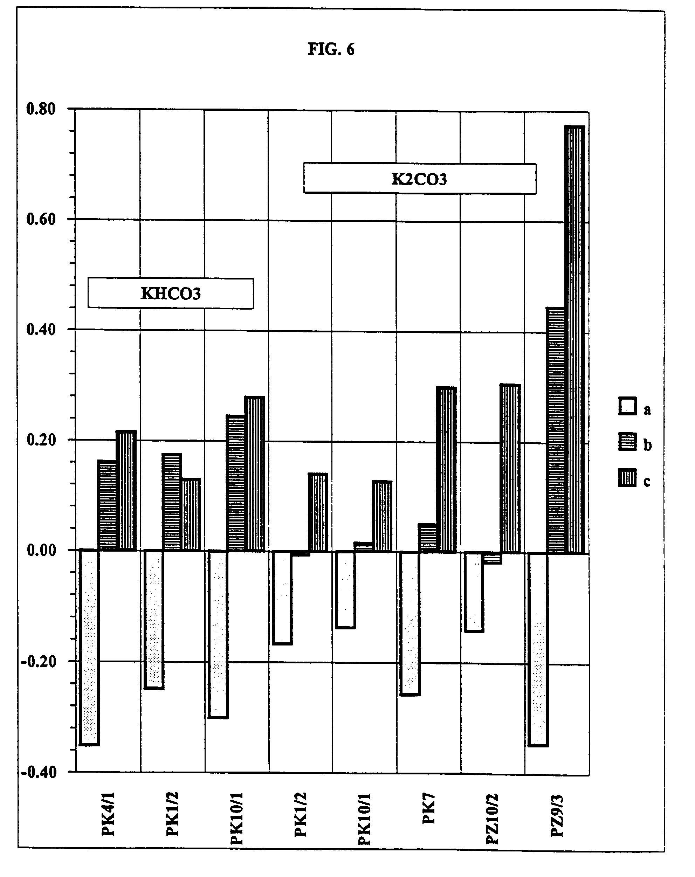

Fig. 6 zeigt den faktoriellen Einfluss von Wasser (Koeffizient A), zum Kaliumkarbonat bzw. Kaliumbikarbonat (Koeffizient B) und von Kaliumzitrat (Koeffizient C) auf die 6 h-Festigkeit eines Mörtels bei verschiedenen Grundbindemitteln. Die Koeffizienten wurden (der bekannten Methode der faktoriellen Versuchsplanung folgend) anhand der nachfolgenden Gleichung statistisch ermittelt:
Y' = 1 + 2(a[A] + b[B] + c[C] + ab[A][B] + ac[A][C] + bc[B][C] + abc[A][B][C])
Y' = Messgrösse (6 h-Druckfestigkeit), normiert auf Y0 (Messgrösse beim Zentralpunkt)
a .. c Auf Y0 normierte Koeffizienten
A .. C Auf Klinker normierte Konzentrationen (-1 bis +1) von A = Wasser, B = Kalium(bi)karbonat, C = Kaliumzitrat

Aus der Fig. 6 ist ersichtlich, dass in den untersuchten erfindungsgemässen Bindemitteln, die auf Portlandzementklinkern stark unterschiedlicher Zusammensetzung basieren, Kaliumzitrat (insbesondere in Gegenwart von Kaliumkarbonat) die für die 6 h-Festigkeitsentwicklung bestimmende Komponente ist.

Ebenso geht aus Fig. 6 hervor, dass sowohl die Wirkung von Kaliumzitrat als auch die von Kaliumkarbonat resp. Bikarbonat mit zunehmendem Ferritgehalt stärker wird.

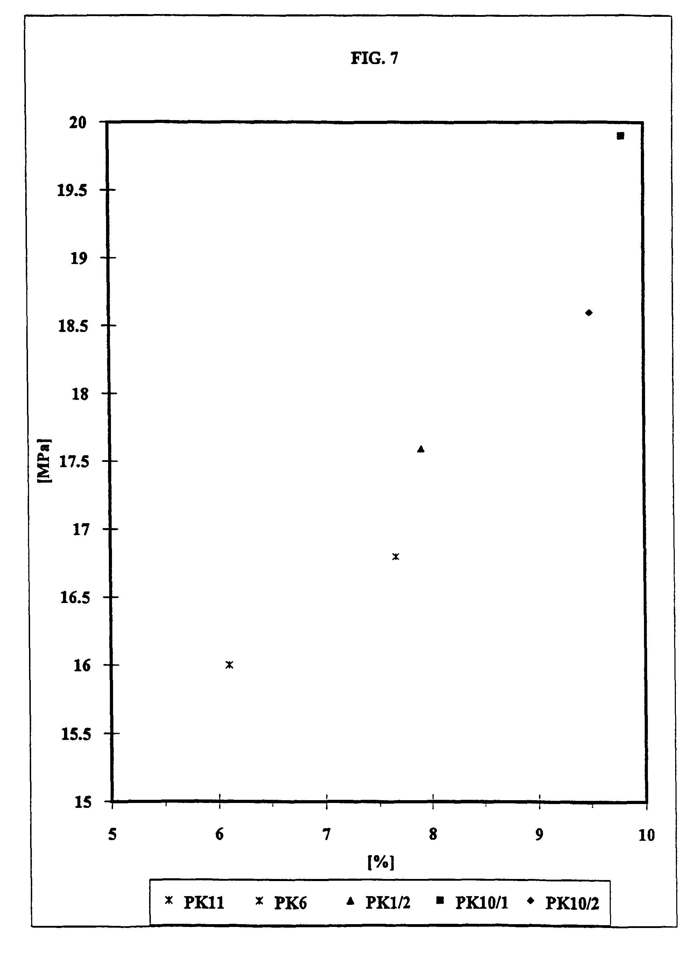

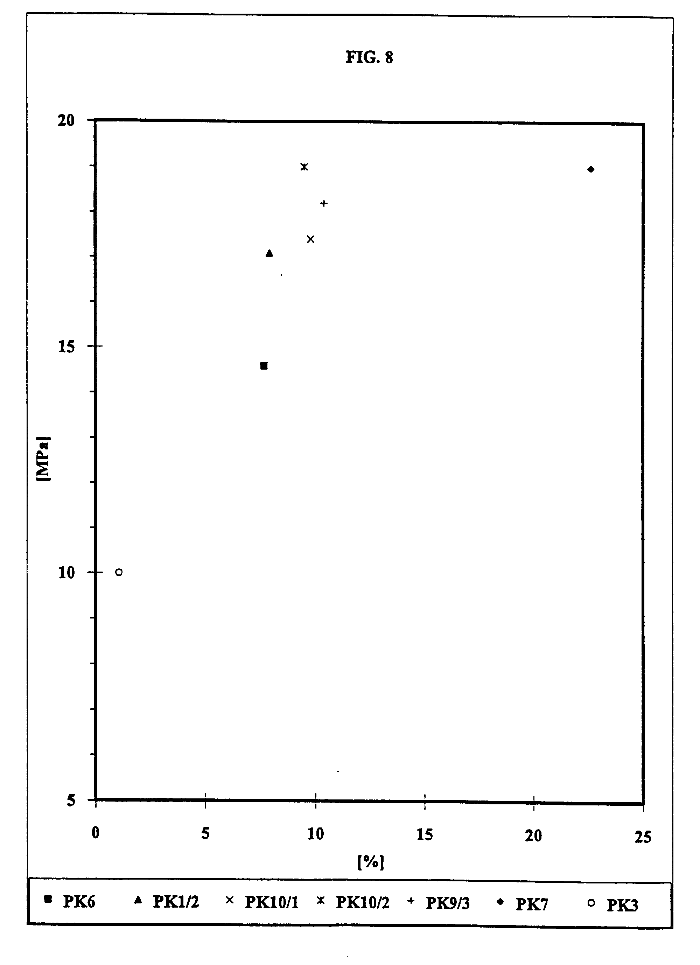

Fig. 7 und 8 zeigen die Korrelation der 6 h-Festigkeiten mit dem C4AF-Gehalt (bestimmt nach Bogue) einer Reihe von erfindungsgemäss aktivierten Klinkern. Als aktivierendes Zusatzmittel wurde bei den Beispielen der Fig. 7 eine Mischung aus Zitrat und Bikarbonat und bei denjenigen der Fig. 8 eine Mischung aus Zitrat und Karbonat verwendet.

In Gegenwart von Bikarbonat (Fig. 7) ist eine positive Korrelation der 6 h-Festigkeit mit dem Ferritgehalt des Klinkers feststellbar. D. h. bei einem Anstieg des C4AF-Gehalts von 6 Gew.-% auf ca. 10 Gew.-% nimmt die Druckfestigkeit (DF) von 16 MPa auf knapp 20 MPa zu. Der Zusammenhang kann als in erster Näherung proportional betrachtet werden.

Bei der Verwendung von Kaliumkarbonat (Fig. 8) verläuft der Festigkeitsanstieg deutlich steiler als beim Kaliumbikarbonat (Fig. 7).

Gemäss der Erfindung wirken Zitronensäure und Alkalisalze der Zitronensäure durch die erfindungsgemässe Aktivierung der Ferritphase des Klinkers beschleunigend und festigkeitserhöhend. Dies soll anhand der Tabellen 6 bis 9 erläutert werden.

Tabelle 6 zeigt den Einfluss von Kaliumzitrat auf das Erhärtungsverhalten von Portlandzement (Blaine 5000 cm²/g, 6% Dihydrat) in ISO-Mörtel. Tabelle 7 zeigt den Einfluss von Kaliumbikarbonat und Kaliumzitrat auf die Zementhärtung. Tabelle 8 zeigt den Einfluss von Alkalikarbonat und Kaliumzitrat auf die Zementhärtung. Tabelle 9 zeigt schliesslich ein Beispiel mit Zitronensäure und Kaliumkarbonat als Zusatzmittel zur Erhöhung der Festigkeit.

Aus den in der Tabelle 6 dargestellten Werten geht eindeutig die beschleunigende und frühfestigkeitserhöhende Wirkung von Kaliumzitrat hervor. Die Abbindezeit wird von 240 Min. (ohne Kaliumzitrat) auf 20 resp. 30 Min. bei 2 Gew.-% Zitrat reduziert. Dies steht im Widerspruch zur geltenden Lehre, wonach sowohl Zitronensäure als auch Zitrat retardierend wirken.

Aus den Tabellen 7 und 8 ist ersichtlich, dass mit Kaliumzitrat in Kombination mit Alkalikarbonaten resp. Alkalibikarbonaten deutlich höhere Festigkeiten (Faktor 2) erzielt werden. Gleichzeitig wird die plastifizierende Wirkung erhöht. Die Zugabe von Alkalikarbonat, insbesondere von Alkalibikarbonat, bewirkt eine Verlängerung der Abbindezeiten im Vergleich zu den karbonatfreien Bindemitteln (Tabelle 6).

Bei den Beispielen der Tabelle 7 verringert sich die Abbindezeit von 240 Min. (0 Gew.-% Kaliumzitrat) auf 120 Min. (2.7 Gew.-% Kaliumzitrat). Bei der Verwendung von Kaliumkarbonat (Tabelle 8) reduziert sich die Abbindezeit von 220 Min. (1.7 Gew.-% Kaliumzitrat) auf 70 Min. (bei 3 Gew.-% Kaliumzitrat).

Das Zitrat ist auch in Gegenwart von Karbonaten resp. Bikarbonaten, die für die Erzielung von hohen Frühfestigkeiten wesentliche Komponente. Die Wirkung des Zitrats (hohe Frühfestigkeiten, Reduktion des Wasserbedarfs) wird durch die Karbonate erhöht. Die in Gegenwart von Zitrat abbindeverzögernde Wirkung von Karbonat, insbesondere von Kaliumbikarbonat, erlaubt eine für kommerzielle Anwendungen sinnvolle Regulation der Abbindezeit.

Die aktivierende Wirkung von Kaliumzitrat, insbesondere in Verbindung mit Bikarbonaten, auf die beim Stand der Technik als unreaktiv betrachtete Ferritphase im Portlandzementklinker wird durch röntgendiffraktometrische Bestimmungen von hydratisierter Bindemittelpaste bestätigt.

Tabelle 10 zeigt das Ausmass der Hydratation der Klinkerphasen, bestimmt mittels Röntgendiffraktometrie (Klinker 1, 6 Gew.-% Gips).

Eine 30%ige Hydratation der C3S-Phase ist auch in nicht aktivierten Portlandzementen durchaus übli-ch, wobei jedoch das im erfindungsgemässen Bindemittel vorhandene Alkalikarbonat bzw. -bikarbonat als Karbonatdonor zur Bildung ungewöhnlich dichter, quasiamorpher Silikathydrate führt, wie sie in gewöhnlichen hydratisierten Portlandzementen nicht beobachtet werden können. Diese sehr dichten, teilweise sulfat-, kalium-, eisen- und karbonathaltigen Silikatphasen tragen mit Sicherheit zur erhöhten Früh- und insbesondere Langzeitfestigkeit bei. Eine Alkaliaktivierung der Silikatphasen im Frühstadium der Hydratation (bis 24 h) ist jedoch in Gegenwart von Zitrat nicht feststellbar.

Es ist anzumerken, dass die obenbeschriebenen Effekte auch bei geringer Kaliumzitratdosierung zu beobachten sind. Von daher ist es als wahrscheinlich zu betrachten, dass es nicht auf die beim Stand der Technik bereits bei hohen Dosierungen von Zitronensäure beobachtete Aktivierung der C3A-Phase ankommt. Diese Vermutung wird auch durch die Tatsache gestützt, dass bei der Erfindung mit einem sulfatbeständigen, C3A-freien Klinker (Klinker Nr. 7) die höchsten Frühfestigkeiten erreicht wurden.

Die Tabellen 6 bis 10 zeigen, dass bei den untersuchten Bindemitteln Kaliumzitrat, als Vertreter einer Polyoxy- bzw. einer Polykarbonsäure, die wesentliche Komponente für die Erreichung der hohen Frühfestigkeiten ist. Die durch Kaliumzitrat aktivierte Hydratation der Ferritphase leistet den grössten Beitrag für die Festigkeiten innerhalb der ersten 24 h nach Hydratationsbeginn (vgl. Fig. 6).

Kaliumkarbonat bzw. -bikarbonat als Karbonatdonor verstärkt die Aktivierung des Ferrits und erhöht die plastifizierende Wirkung des Zitrats. Die genannten Karbonatdonoren verzögern andererseits das Abbinden. Die Verlängerung der Ruhepause (Dauer der Verarbeitbarkeit) der Zementpaste bzw. des Mörtels geht sehr wahrscheinlich auf die Bildung einer Calciumkarbonatschutzschicht auf der Oberfläche der CAO-haltigen Klinkerphase zurück ("Karbonateffekt").

Gewöhnlicher Portlandzement enthält üblicherweise 4-7 Gew.-% Gips als Abbindeverzögerer. Er wird in Form von Naturgips und/oder Chemiegips dem Portlandzementklinker vor dem Mahlen zugegeben. Im Portlandzement liegt der Gips als Gemisch von Dihydrat, Halbhydrat und Anhydrit vor. Die Mengenverhältnisse der Calciumsulfatphasen hängen sehr stark von den Mahlbedingungen ab.

Im erfindungsgemässen Bindemittel haben die Menge der Calciumsulfatphasen und die Art und Weise der Zumischung der calciumsulfathaltigen Additive einen Einfluss auf die Festigkeitsentwicklung und das Abbindeverhalten. Als calciumsulfathaltiges Additiv wird vorteilhafterweise Dihydrat (CaSO4 * 2H2O) verwendet, wobei dieses auch mit Füllern wie Kalkstein vermischt sein kann. Alternativ kann auch Anhydrit (CaSO4) eingesetzt werden. Die erreichbaren Frühfestigkeiten liegen dann aber 10-30% tiefer als mit Dihydrat.

Enthält das erfindungsgemässe Bindemittel Halbhydrat (CaSO4 * 0.5H2O resp. CaSO4 * 0.8H2O) so hängen die Festigkeitsentwicklung und das Abbindehalten vom Klinkertyp ab.

Die Tabellen 11 und 12 illustrieren den Einfluss des Hablhydrats in Gegenwart von Dihydrat auf die Eigenschaften des Bindemittels in Abhängigkeit von der Formulierung des aktivierenden Zusatzmittels. Es werden kommerzielle Portlandzemente den entsprechenden, erfindungsgemäss gipsfrei gemahlenen Klinkern mit zugesetztem Dihydrat gegenübergesetzt. Als eisenkomplexierende Verbindung wird einerseits Kaliumzitrat und andererseits Zitronensäure und als Karbonatdonor einerseits Kaliumkarbonat und andererseits Kaliumbikarbonat eingesetzt.

Die Beispiele in Tabelle 11 haben folgende chemischen und physikalischen Parameter:

| | |
|---|---|
| kommerzieller Portlandzement (PZ11) | Blaine 5500 cm²/g |
| Dihydrat | 1.4 Gew.-% |
| Halbhydrat | 3 Gew.-% |
| Anhydrit, unlöslich | 2.2 Gew.-% |

Die obige Grundmischung wurde mit zwei verschiedenen Aktivatoren versetzt:
A1: Total 4.6 Gew.-%,
   davon 40% K2CO3 und 60% Kaliumzitratmonohydrat
A2: Total 3.5 Gew.-%,
   davon 71% K2CO3 und 29% Zitronensäure

Die chemischen und physikalischen Eigenschaften der Beispiele in Tabelle 12 sind wie folgt:

| | |
|---|---|
| kommerzieller Portlandzement (Kleinkems) | Blaine 5000 cm²/g |
| Dihydrat | 1.5 Gew.-% |
| Halbhydrat | 1.2 Gew.-% |

Diese Grundmischung wurde mit drei verschiedenen Aktivatorformulierungen versetzt:
A1: 4.6 Gew.-%, 40% K2CO3, 60% Kaliumzitratmonohydrat
A2: 4.7 Gew.-%, 43% K2CO3, 57% Kaliumzitratmonohydrat
A3: 3.5 Gew.-%, 71% K2CO3, 29% Zitronensäure

Die Beispiele der Tabelle 13 beruhen auf gipsfrei gemahlenem Klinker (PK1/4) einer Feinheit von 5300 cm²/g Blaine, und 6 Gew.-% Dihydrat. Als aktivierende Zusatzmittel wurden 18.09 mMol% K2CO3 kombiniert mit unterschiedlichen Mengen an Zitronensäure oder Zitrat (in äquivalenten molaren Mengen) verwendet.

Die Beispiele der Tabelle 14 beruhen auf gipsfrei gemahlenem Klinker (PK1/4) einer Feinheit von 5300 cm²/g nach Blaine und 5 Gew.-% zugesetztem Dihydrat. Als aktivierende Zusatzmittel wurden 8.32 mMol% Kaliumzitratmonohydrat in Verbindung mit variierenden Mengen an Kaliumkarbonat oder Kaliumhydrogenkarbonat verwendet.

Die Bindemittelgemische der Tabelle 15 beruhen auf gipsfrei gemahlenem Klinker (PK1/5) und 0-6 Gew.-% Gips und 6-0 Gew.-% Halbhydrat. Es wurden jeweils folgende aktivierende Zusatzmittel eingesetzt:
A1: 4.6 Gew.-%, 40% K2CO3, 60% Kaliumzitratmonohydrat
A2: 3.5 Gew.-%, 71% K2CO3, 29% Zitronensäure

Aus den Resultaten der Tabellen 11 bis 15 wird ersichtlich, dass ein deutlicher und signifikanter Unterschied hinsichtlich des Einflusses der Zusammensetzung des aktivierenden Zusatzmittels auf die Eigenschaften des erfindungsgemässen Bindemittels zwischen portlandzementhaltigen und gipsfrei gemahlenen Klinkern (bzw. halbhydratfreien Formulieren) besteht.

In Gegenwart von Kaliumkarbonat als Karbonatdonor wirkt Zitronensäure in portlandzementhaltigen Formulierungen als effizienter Verzögerer, in halbhydratfreien Formulierungen hingegen als Aktivator bezüglich der Abbindezeiten und der Festigkeitsentwicklung. Im Gegensatz dazu wirkt Kaliumzitrat in beiden Formulierungen als Aktivator. Der Wasserbedarf und die Empfindlichkeit gegenüber Aenderungen des Wasser/Zement-Verhältnisses ist in zitronensäurehaltigen Formulierungen deutlich und signifikant höher als in K3C-haltigen Formulierung (insbesondere bei portlandzementhaltigen Bindemittelmischungen).

Bindemittelformulierungen, die Kaliumkarbonat/Zitronensäure und kommerzieller Portlandzement enthalten (z. B. wie in der eingangs zitierten US 4,842,649 beschrieben) zeichnen sich, im Unterschied zu kaliumkarbonat-/kaliumzitrathaltigen Formulierungen, generell durch hohe Empfindlichkeit der Abbindezeiten und der Festigkeitsentwicklung gegenüber Aenderungen des Wasser/Zement-Verhältnisses und durch signifikant tiefere Festigkeiten aus. Die in der US 4,842,649 beschriebene verzögernde Wirkung von Zitronensäure konnte nur in portlandzementhaltigen Formulierungen bestätigt werden, nicht jedoch in Formulierungen mit geringem Halbhydratgehalt. Insbesondere bei der Verwendung von gipsfrei gemahlenen Klinkern wirkt die Zitronensäure sowohl auf die Abbindezeiten als auch auf die Festigkeitsentwicklung als Aktivator. Die in der US 4,842,649 der Zitronensäure gleichgestellte verzögernde Wirkung von Kaliumzitrat konnte weder in portlandzementhaltigen Mischungen, noch in Formulierungen mit geringem Halbhydratgehalt (insbesondere nicht in gipsfrei gemahlenen Klinkern enthaltenden Formulierungen) bestätigt werden.

Bindemittelformulierungen nach US 4,842,649, die handelsüblichen Portlandzement und Kaliumkarbonat/Zitronensäure als aktivierendes Zusatzmittel enthalten, können nicht nur bezüglich Abbindzeiten, sondern auch im Hinblick auf die Festigkeitsentwicklung zu überraschenden Ergebnissen führen: Das zitronensäurehaltige Bindemittelgemisch auf der Basis von PZ11/1 (Tabelle 11, Reihe 5 und 6) erhärtet zwar nach 210 bzw. 270 Min., zeigt jedoch keinerlei Frühfestigkeiten. Trotzdem wurde nach 3 Tagen eine Druckfestigkeit von 43 MPa gemessen. Hier handelt es sich jedoch nicht um einen sogenannten "False SET", welcher für den Fachmann sehr leicht vom tatsächlich erhärteten Mörteln und Betonen unterschieden werden kann. Die erhärtete Mörtelprobe unterschied sich in ihrem Aussehen nicht vom entsprechenden kaliumzitrathaltigen Proben. Letztere wiesen jedoch Druckfestigkeiten von 23-24 MPa auf. Es leuchtet ein, dass in der praktischen Anwendung (z. B. auf der Baustelle) derartige überraschende Ergebnisses katastrophale Auswirkungen haben können (Einsturz infolge zu frühen Ausschalens).

Vergleichsversuche haben gezeigt, dass die puzzolanischen Zusätze für das in der US 4,842,649 beschriebene Bindemittel essentiell sind. Generell konnten nämlich die dort angegebenen Festigkeitswerte nicht erhalten werden, wenn die dort beschriebenen Zusätze (Metakaolin, Flugasche, Silica fume etc.) nicht beigegeben wurden.

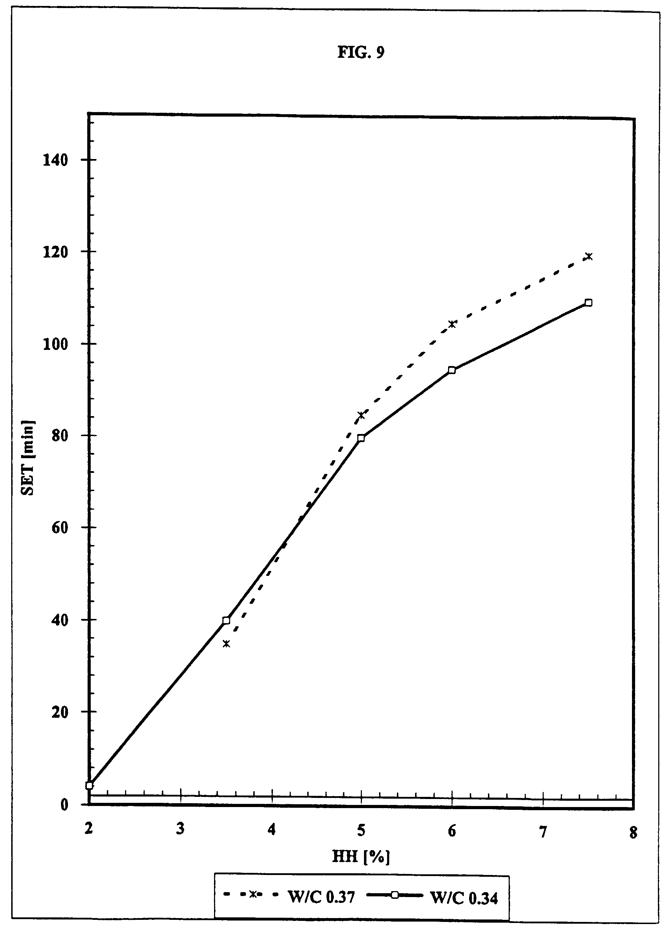

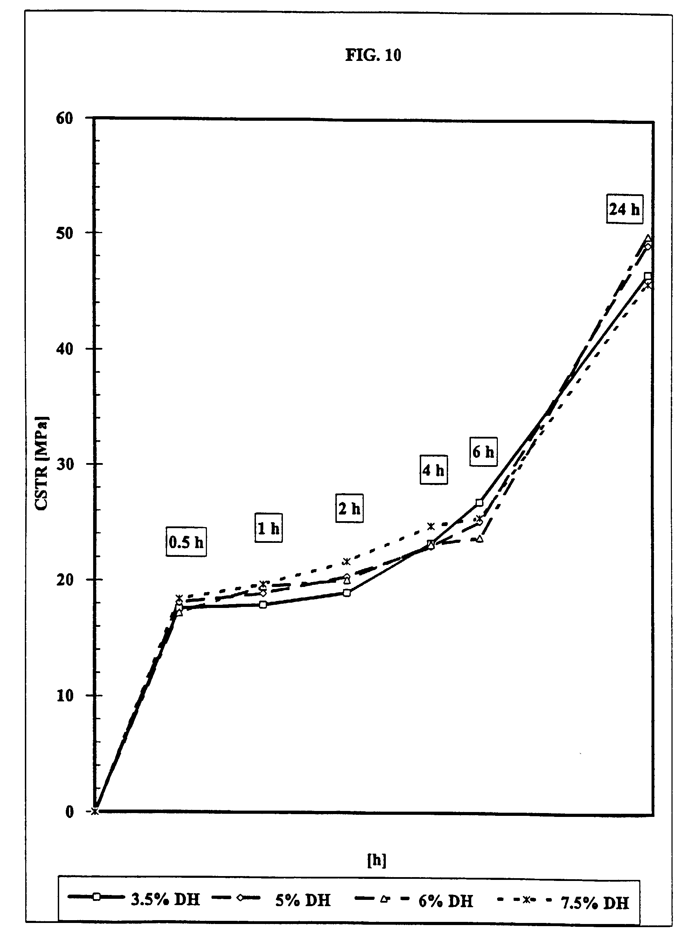

Figuren 9 und 10 illustrieren den Einfluss der Gipszugabe auf die Abbindezeiten von ISO-Mörtelmischungen und Standard-Betonmischungen. Einem Portlandzementklinker (Typ PK1/5) wurden 6 Gew.-% Gips zugegeben. Die 4,55 Gew.-% des aktivierenden Zusatzmittels enthielten 40% K2CO3 und 60% Kaliumzitratmonohydrat. Fig. 9 zeigt die Resultate, die unter Verwendung eines erfindungsgemässen Bindemittels in einer ISO-Mörtelmischung erhalten wurden. Fig. 10 zeigt die Festigkeitsentwicklung in Standardbetonmischungen.

Die in den Figuren 9 und 10 dargestellten Resultate zeigen deutlich, dass über den Gipsgehalt die Abbindezeiten des erfindungsgemässen Bindemittels zwischen 2 Min. (Spritzbeton-formulierung) und ca. 120 Min. (Transportbeton) reguliert werden können (nahezu lineare Abhängigkeit der Abbindezeit vom Dihydratgehalt). Im Unterschied zu herkömmlichen hochfrühfesten Bindemitteln wird aber die Festigkeitsentwicklung dadurch nicht beeinflusst. Trotz unterschiedlichem Dihydratgehalt (DH) nehmen die Festigkeitsentwicklungen im wesentlichen denselben Verlauf.

Der Einfluss des Gipses auf die Abbindezeiten nimmt mit dessen zunehmendem Gehalt ab. Dies ist vor allem für die Anwendungen im Transportbetonbereich (zwischen 80 und 120 Min.) vorteilhaft.

Aehnliche Resultate wurden mit Formulierungen erhalten, die natürlichen Anhydrit enthalten. In Gegenwart von Anhydrit reagieren aber die Abbindezeiten empfindlicher auf den Gipsgehalt.

Die Tabelle 16 zeigt eine Zusammenstellung bevorzugter Ausführungsbeispiele. Folgende Aktivatoren wurden als Zusatzmittel verwendet:
CaSO4: 5.0-5.8 Gew.-% Dihydrat, Anhydrit, Halbhydrat (als Dihydrat gerechnet)
A1: 3.85-5.0 Gew.-%, 40-56% K2CO3, 40-60% Kaliumzitratmonohydrat
A2: 4.7-5.7 Gew.-%, 43-53% KHCO3, 47-57% Kaliumzitratmonohydrat
A3: 2.3 Gew.-%, 87% K2Co3, 13 Gew.-% Zitronensäure

Tabelle 17 illustriert die Eigenschaften von besonders bevorzugten Ausführungsbeispielen der Erfindung in Standardbeton (400 kg/m³, Standardzuschlagstoff) bei verschiedenen Wasser/Zement-Verhältnissen resp. bei unterschiedlicher Verarbeitbarkeit des Frischbetons. Es wurde folgende Bindemittel formulierung verwendet:
Gipsfrei gemahlener Klinker PK1/5
6 Gew.-% Dihydrat
4.55 Gew.-% Aktivator (40% K2CO3, 60% Kaliumzitrat)

In Tabelle 12 sind vier besonders bevorzugte Ausführungsbeispiele der Erfindung zusammengestellt. Das erfindungsgemässe Bindemittel wurde in Standardbeton (400 kg Zement pro m³, Standardzuschlagstoff) bei verschiedenen Wasser/Zement-Verhältnissen bzw. unterschiedlicher Verarbeitbarkeit des Frischbetons eingesetzt. Die Sieblinie der Standardzuschlagstoffe entspricht der Fuller-Kurve.

Das verwendete Bindemittel wies folgende Formulierung auf:
gipsfrei gemahlener Klinker PK1/5
Dihydrat 6 Gew.-%
Aktivator 4.55 Gew.-%
davon 40% K2CO3 und 60% Kaliumzitrat

Die Tabelle zeigt deutlich, dass mit Wasser/Zement-Werten zwischen 0.32 und 0.37 und guter Verarbeitbarkeit (Ausbreitmass 35-63 cm) sehr hohe Frühfestigkeiten (4 h) von deutlich über 20 MPa erreicht werden. Nach 28 Tagen betrug die Festigkeit zwischen 80 und 90 MPa.

Tabelle 13 zeigt den Einfluss der Zugabe von Dikaliumoxalat auf die Bindemitteleigenschaften in ISO-Mörtelmischungen. Alle Bindemittel beruhen auf dem Klinkertyp PK1/5, welcher mit 6 Gew.-% Dihydrat vermischt wurde.

Der Ergebnisse zeigen, dass K3C weitgehend durch Oxalat ersetzt werden kann, ohne dass die Festigkeitsentwicklung wesentlich beeinflusst würde. Die Verwendung von Oxalat hat allerdings eine leichte Zunahme des Wasserbedarfs und der eine Verlängerung der Abbindezeiten zur Folge. Vorteilhaft ist die Verringerung der Hydratationswärme.

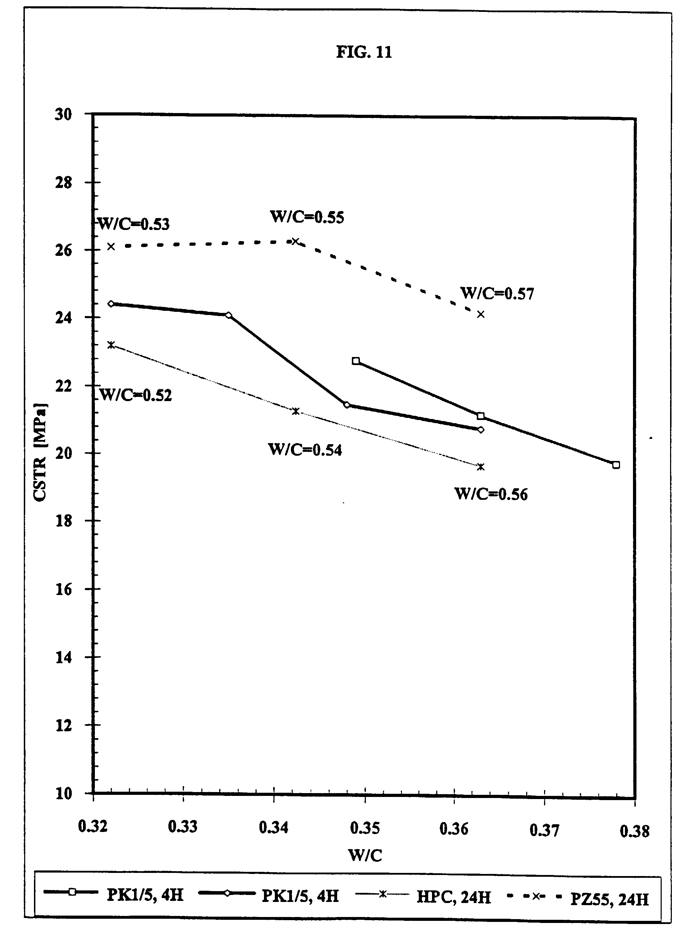

Fig. 11 zeigt die Abhängigkeit der 4 h-Festigkeit von Wasser/Zement-Verhältnis. Es werden aktivierte Portlandzemente (PK1/5, 400 kg/m³) mit bekannten hochfrühfesten Portlandzementen (HPC Untervaz und PC55 Kleinkrems) verglichen.

Aus Fig. 11 ist zu entnehmen, dass die Abhängigkeit der Druckfestigkeitsentwicklung vom Wasser/Zement-Verhältnis (W/C) etwa gleich stark ist wie bei gewöhnlichen, d. h. zusatzmittelfreien Portlandzementen. Dies ist ein grosser Vorteil.

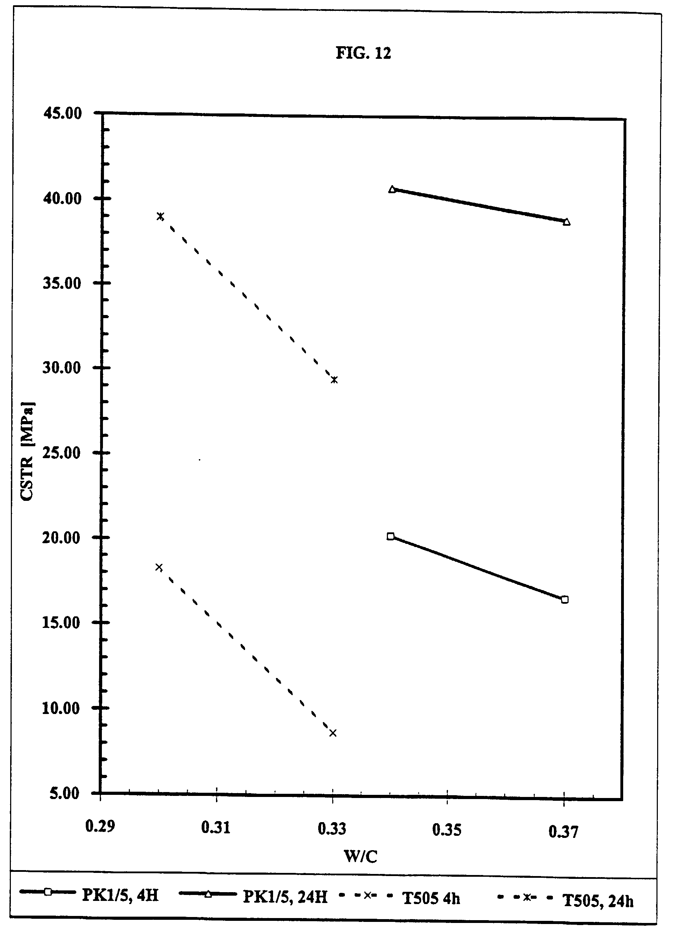

Fig. 12 veranschaulicht, dass die Erfindung sich bezüglich der Empfindlichkeit gegenüber Aenderungen des Wasser/Zement-Wertes von bekannten hochfrühfesten Bindemitteln deutlich abhebt. Das zum Vergleich herangezogene Bindemittel Pyrament (gemäss US 4,842,649), welches in der Figur mit T505 bezeichnet wird, ist deutlich empfindlicher. Bei einer Aenderung des Wasser/Zement-Verhältnisses um 10% von 0.33 auf 0.30 ändert sich die 4 h-Festigkeit um den Faktor 2. Im Gegensatz dazu führt eine entsprechende Aenderung im Wasser/ Zement-Verhältnis von 0.37 auf 0.34 bei einem erfindungsgemässen Bindemittel zu einer Druckfestigkeitserhöhung von nur gut 15%. Aehnliches gilt für die 24 h-Festigkeit.

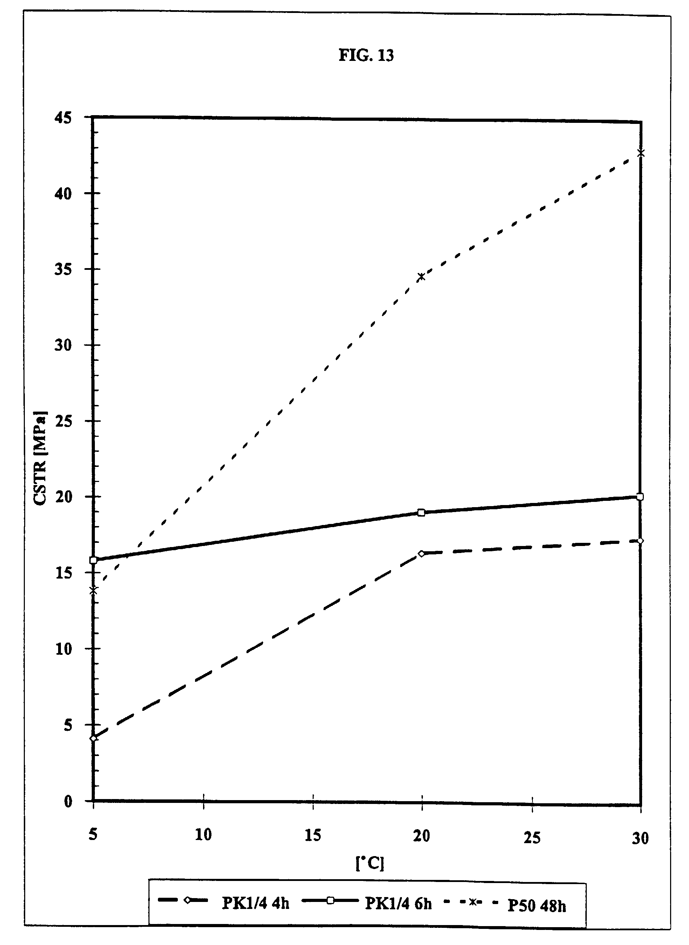

Fig. 13 zeigt die Temperaturabhängigkeit der Frühfestigkeitsentwicklung bei ISO-Mörtelmischungen. Auf der Abszisse ist die Temperatur in Grad C und auf der Ordinate die Druckfestigkeit in MPa aufgetragen. Das erfindungsgemässe Bindemittel (PK1/5 gipsfrei gemahlen auf Blaine 5300 cm²/g) wurde mit einem bekannten frühfesten Zement vom Typ P50 verglichen. Wie aus der Figur zu entnehmen ist, ist die 4 h- und insbesondere die 6 h-Festigkeit, die mit dem erfindungsgemässen Bindemittel erzielt wird, von der Temperatur deutlich weniger abhängig als die für den P50 relevante 48 h-Festigkeit.

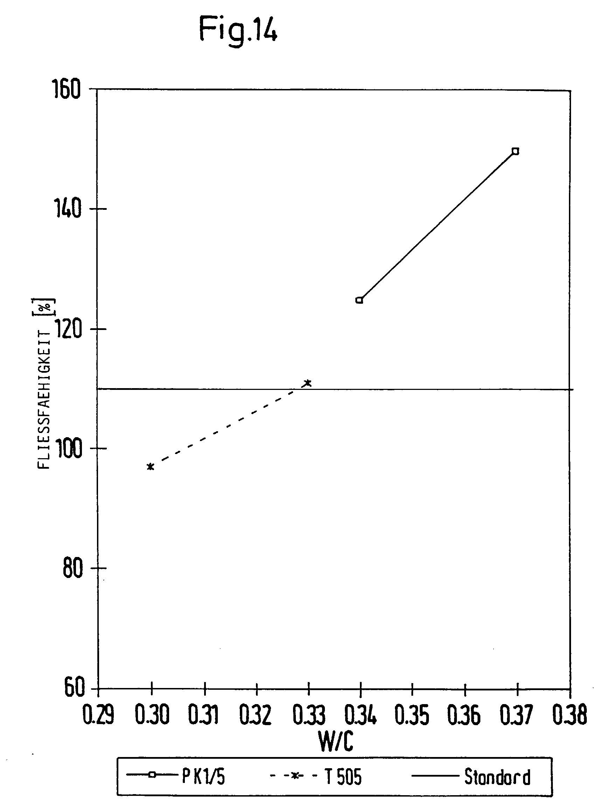

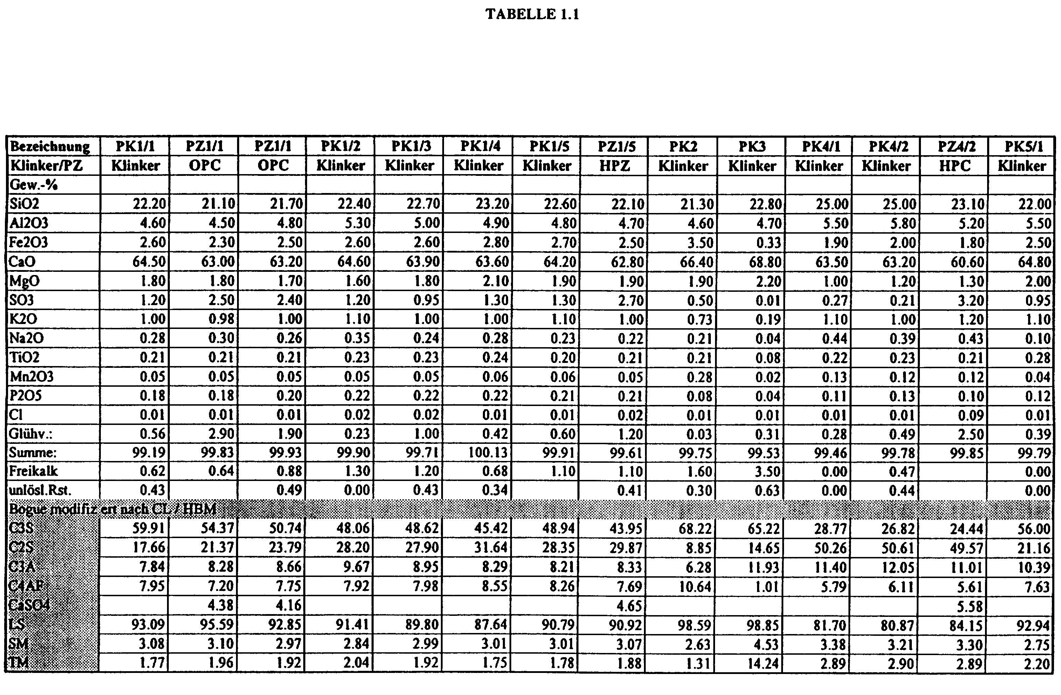

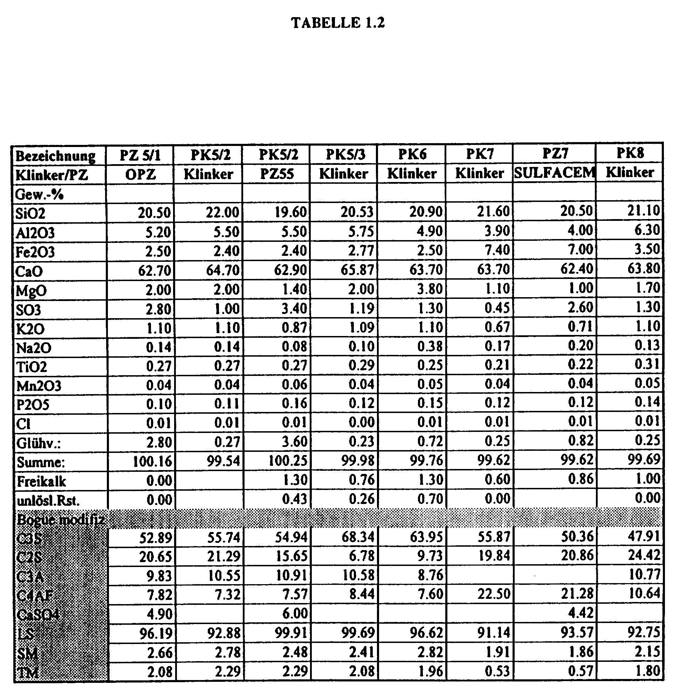

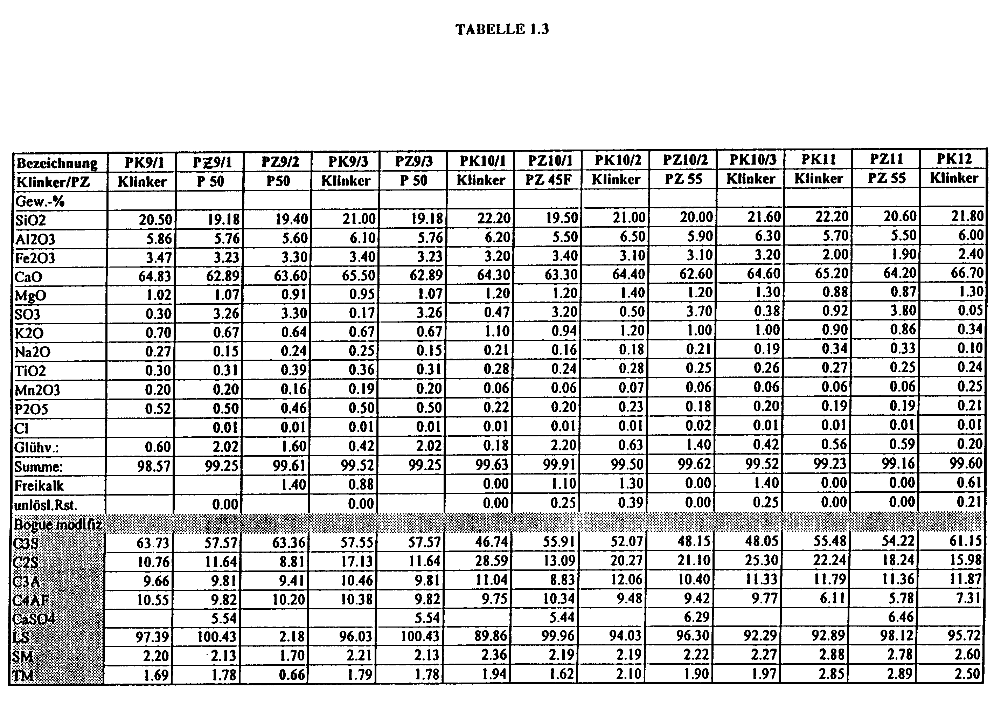

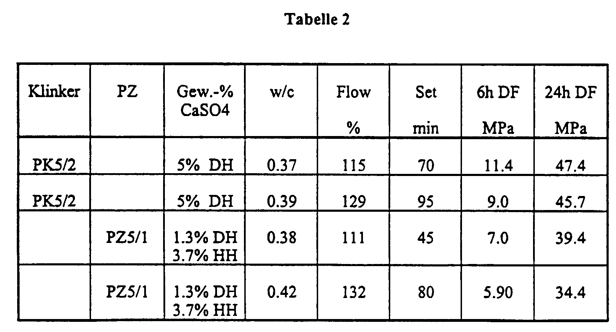

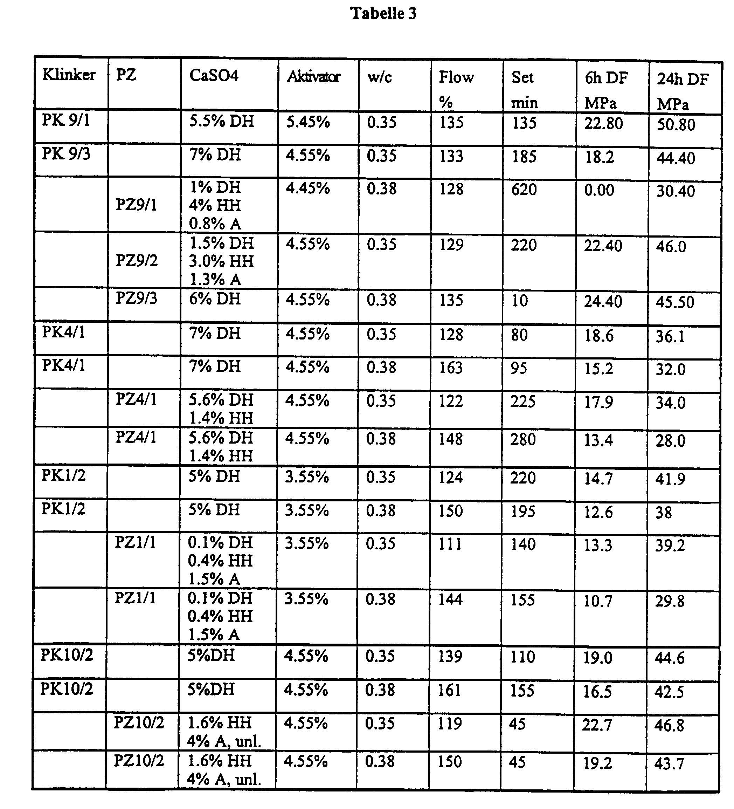

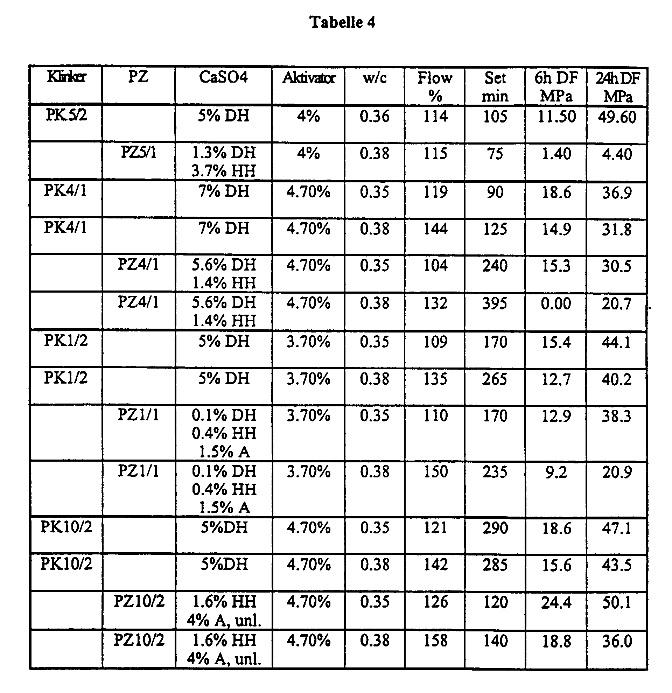

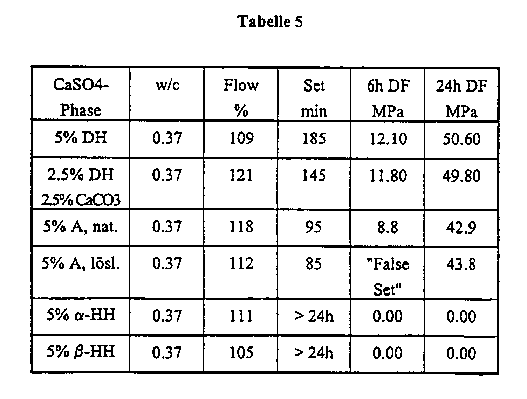

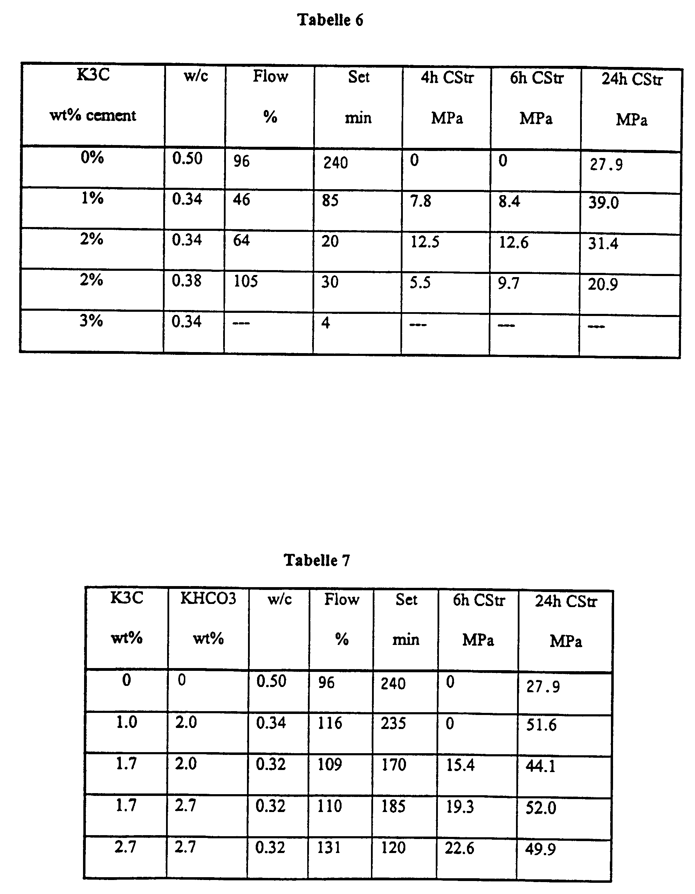

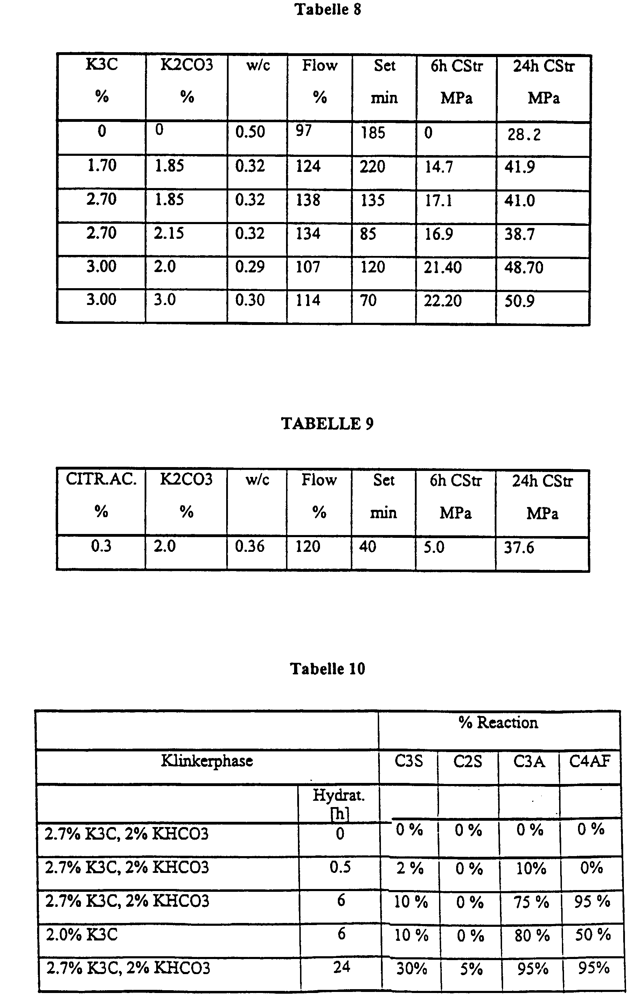

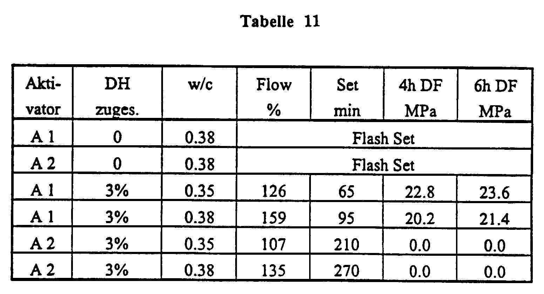

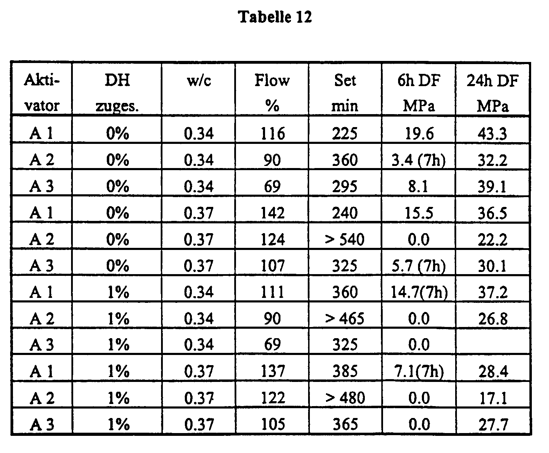

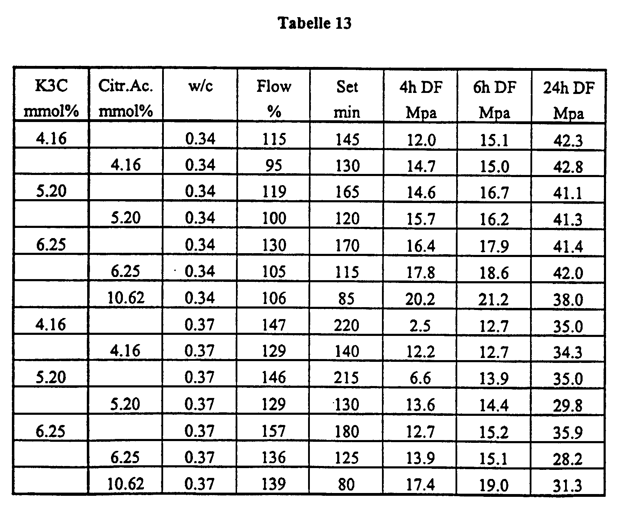

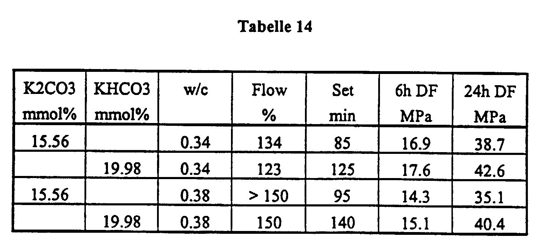

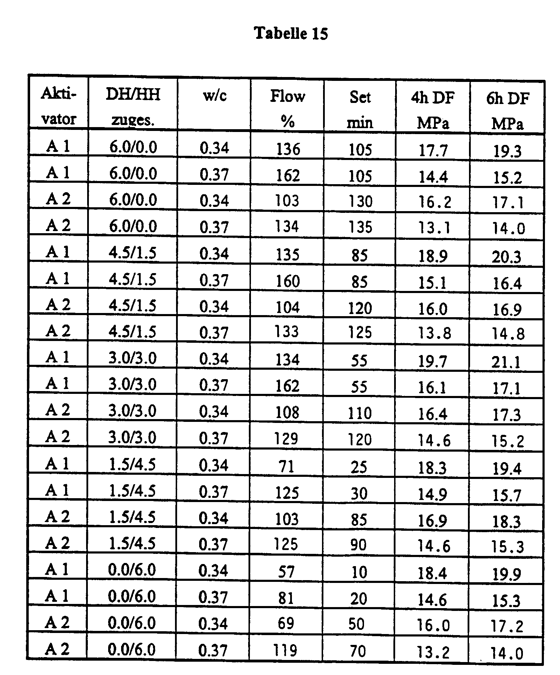

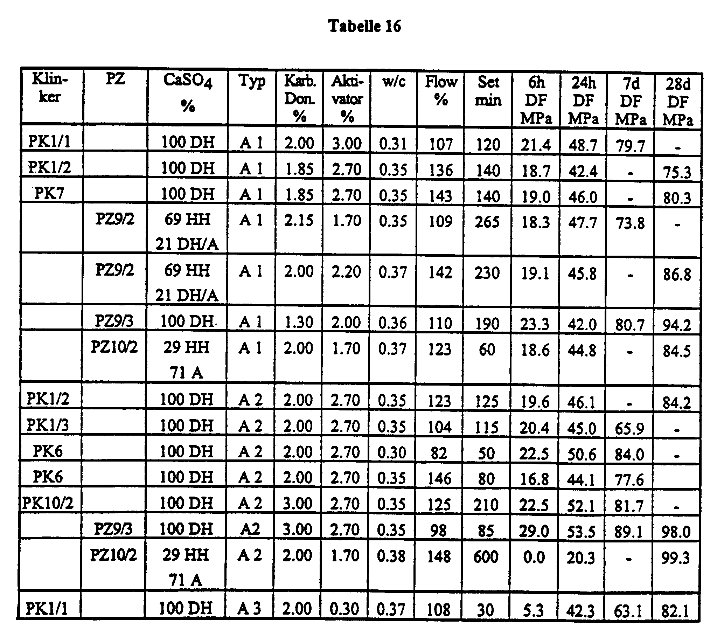

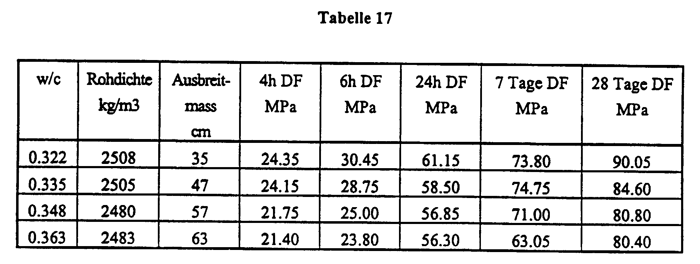

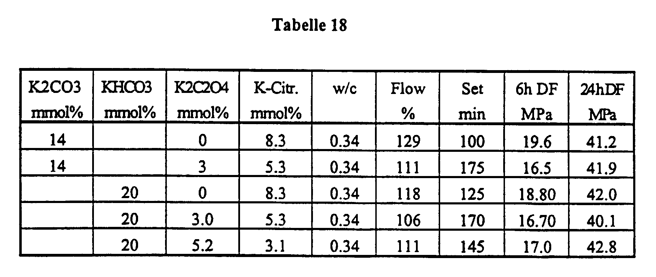

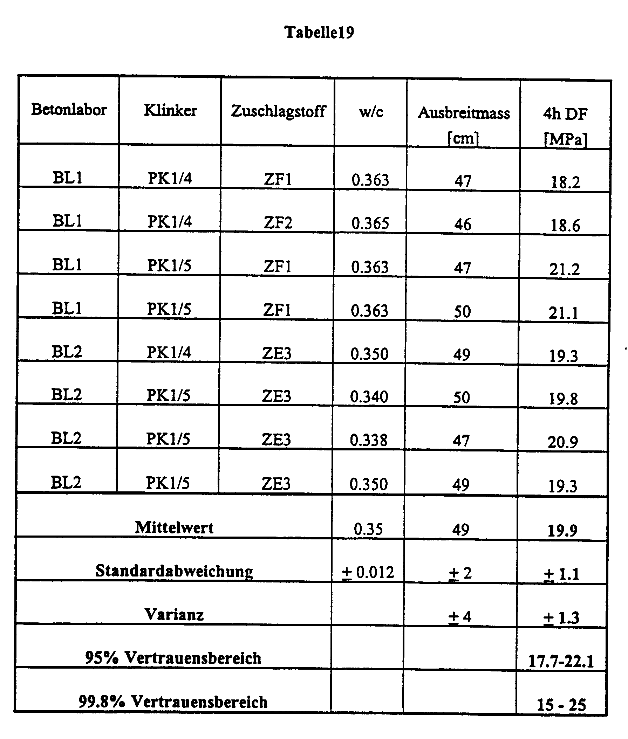

Fig. 14 zeigt die vorteilhaft hohe Fliessfähigkeit (FLOW) eines erfindungsgemässen Bindemittels in Abhängigkeit vom Wasser/Zement-Wert (W/C). Bei einem Wasser/Zement-Wert von W/C = 0.34 beträgt der FLOW eines auf dem Klinker PK1/5 beruhenden Bindemittels ca. 125%. Bei W/C = 0.37 liegt der FLOW sogar bei ca. 150%.

Beim bereits mehrmals erwähnten Pyrament (T505) beträgt der FLOW knapp etwas mehr als 110% (Standard) bei einem Wasser/ Zement-Verhältnis W/C = 0.33. Bei einem W/C-Wert von 0.30 liegt der FLOW sogar unter 100%. Die Erfindung zeigt daher ein eindeutig besseres Verhalten als das bekannte hochfrühfeste Bindemittel.

Zum Schluss soll noch gezeigt werden, dass durch die Erfindung bei der Herstellung von Bindemitteln die "Trefferwahrscheinlichkeit" beträchtlich erhöht und die "Varianz" deutlich erniedrigt wird gegenüber dem Stand der Technik.

Für die in der Tabelle 13 dargestellte statistische Auswertung wurden verschiedene Klinker gipsfrei vermahlen und mit 6 Gew.-% Dihydrat und 3.55 Gew.-% aktivierenden Zusatzmitteln homogenisiert. Als Zusatzmitteln wurden K2CO3 und K3C (Kaliumzitrat) im molaren Verhältnis 1.75 verwendet. Die Klinker waren vom Typ PK1/4 (Blaine 5300 cm²/g) und PK1/5 (Blaine 5600 cm²/g). Es wurden zwei Chargen aus unterschiedlichen Klinkerproduktionszyklen, bei üblicher Bandbreite chemischer Zusammensetzung und Reaktivität, in einer Kugelmühle mit geschlossenem Mahlkreislauf gemahlen.

Die Betonprüfungen fanden in zwei Betonlabors (BL1 und BL2) unter folgenden Bedingungen statt:
BL1: Zwei verschiedene Zuschlagsstoffe (ZF1, ZF2), Sieblinie entsprechend der Fuller-Kurve.
   Pro m³: 756 kg Sand (0/5 mm), 1182 kg Kies (5/32 mm), 400 kg Zement.
BL2: Ein Zuschlagstoff (ZE3), mineralogische Zusammensetzung und Sieblinie entsprechend dem Standard der eidgenössischen Mess- und Prüfungsanstalt (EMPA).
   Pro m³: 626 kg Sand (0/5 mm), 1330 kg Kies (5/32 mm), 400 kg Zement.

Die Betonmischung erfolgte nach ASTM C192 und die Prüfung an 12 x 12 x 36 cm Prismen. Die Verarbeitungstemperatur betrug zwischen 17 und 22 °C.

Aus der Testserie ergibt sich folgendes:

Die Variation der Klinkerqualität (Zusammensetzung, Klinkerreaktivität), der Mahlbedingungen (Luftfeuchtigkeit, Klinkermahlbarkeit), Mischbedingungen, des Zuschlagstofftyps, der Sieblinie und der Standardverarbeitbarkeit (Ausbreitmass 46-51 cm) entsprechen den in der Praxis üblicherweise auftretenden Schwankungen.

Bei den erfindungsgemässen Bindemitteln betragen die Standardabweichung ±5.5% (1.1 MPa) und die Varianz ±6.5% (1.3 MPa). Diese Grössen liegen damit deutlich unterhalb den bei gewöhnlichen Portlandzementen erwartbaren Werten. Laut ACI 214 gilt eine Standardabweichung von 3.0-4.0 MPa für die 28 Tage-Festigkeiten (21-28 MPa) von gewöhnlichem Portlandzement als sehr gut. Insbesondere die Trefferwahrscheinlichkeit von 99.8% für die Erlangung von Festigkeiten oberhalb der spezifizierten Druckfestigkeiten (15 MPa nach 4 h) ist ein wesentlicher Vorzug des erfindungsgemässen Bindemittels gegenüber üblichen Portlandzementen und vor allem gegenüber den bekannten alkaliaktivierten Bindemittelsystemen. Der 95%-Vertrauensbereich liegt sogar bei 19.9 ±2.2 MPa.

Zusammenfassend kann folgendes gesagt werden:

Gegenstand der Erfindung ist ein hydraulisches Bindemittel, das Portlandzementklinker, ein calciumsulfathaltiges Additiv, festigkeitserhöhende Zusatzmittel und gegebenenfalls Füllstoffe bzw. Zusatzstoffe, wie sie üblicherweise in Mischzementen zu finden sind, enthält, und mit dem im Vergleich zu bisherigen Bindemitteln erhöhte Früh- und Endfestigkeiten (> 28 Tage) in Beton- und Mörtelmischungen erzielt werden können. Durch die Erfindung werden insbesondere folgende Nachteile bekannter Bindemittel vermieden:
- unübliche Verarbeitbarkeit in Mörtel- und Betonmischungen
- hohe Empfindlichkeit der relevanten anwendungstechnischen Parameter gegenüber Aenderungen in der Bindemittelzusammensetzung
- Empfindlichkeit gegenüber dem Wasser/Zement-Verhältnis
- starke Abhängigkeit der Frühfestigkeit von der Verarbeitungstemperatur

Das erfindungsgemässe Bindemittel zeichnet sich vorzugsweise durch einen Halbhydratgehalt von weniger als 50%, insbesondere weniger als 20%, gerechnet als Dihydrat aus. Als festigkeitserhöhende Zusatzmittel werden vorzugsweise mindestens eine eisenkomplexierende Verbindung und mindestens eine Karbonatdonor verwendet.

Die Erfindung gibt auch vorteilhafte Verfahren zur Herstellung von Portlandzementen mit definiertem maximalem Halbhydratgehalt an.

## Patentansprüche

1. Hydraulisches Bindemittel zur Herstellung von Beton mit hoher Früh- und Langzeitfestigkeit, basierend auf Portlandzement mit Calciumsulphatphasen und Zusatzmitteln zum Einstellen von Verarbeitbarkeit, Abbindezeit, Früh- und/oder Langzeitfestigkeit, wobei die Zusatzmittel zur Erhöhung der Festigkeit mindestens einen Carbonatdonor, insbesondere wasserlösliche Salze der Kohlensäure, und mindestens eine eisenkomplexierende Verbindung, insbesondere ein wasserlösliches Salz der Polyoxycarbonsäure oder der Polycarbonsäure oder ein Diketon, enthalten, dadurch gekennzeichnet, dass der Portlandzement einen definierten maximalen Calciumsulphathalbhydratgehalt von weniger als 50 Gew.-% des gesamten Calciumsulphatgehalts im Portlandzement gerechnet als Dihydrat hat.

2. Hydraulisches Bindemittel zur Herstellung von Beton mit hoher Früh- und Langzeitfestigkeit, basierend auf Portlandzement mit Calciumsulfatphasen und Zusatzmitteln zum Einstellen von Verarbeitbarkeit, Abbindezeit, Früh- und/oder Langzeitfestigkeit, dadurch gekennzeichnet, dass der Portlandzement einen definierten maximalen Calciumsulfathalbhydratgehalt von weniger als 20 Gew.-% gerechnet als Dihydrat hat und dass es Gips, Anhydrit oder ein Gemisch von beiden als calciumsulfathaltiges Zusatzmittel zur Verlängerung der Abbindezeit und als Karbonatdonor Kaliumbicarbonat enthält.

3. Bindemittel nach einem der Ansprüche 1 oder 2, dadurch gekennzeichnet, dass der Portlandzement auf einem Portlandzementklinker mit einem Anteil von mehr als 10 Gew.-% C3A basiert und dass der Calciumsulfathalbhydratgehalt gerechnet als Dihydrat weniger als 10 Gew.-% beträgt.

4. Bindemittel nach einem der Ansprüche 1 bis 3, dadurch gekennzeichnet, dass die Menge des calciumsulfathaltigen Zusatzmittels so bemessen ist, dass der Calciumsulfatgehalt des Bindemittels gerechnet als CaSO4 zwischen 0.7 Gew.-% und 8 Gew.-% liegt.

5. Bindemittel nach einem der Ansprüche 1 bis 4, dadurch gekennzeichnet, dass der Portlandzement auf einem Portlandzementklinker mit einem Anteil von mehr als 8 Gew.-% C3A und einem Anteil von mehr als 0.9 Gew.-% K2O basiert und dass der Calciumsulfathalbhydratgehalt weniger als 5 Gew.-% beträgt.

6. Bindemittel nach einem der Ansprüche 1 bis 5, dadurch gekennzeichnet, dass der Portlandzement auf einem Portlandzementklinker mit einem Anteil von mehr als 9 Gew.-% C3A und einem Anteil von mehr als 1.0 Gew.-% K2O basiert und dass der Calciumsulfathalbhydratgehalt weniger als 1 Gew.-% beträgt.

7. Bindemittel nach einem der Ansprüche 1 bis 6, dadurch gekennzeichnet, dass die Zusatzmittel einen auf den Klinker bezogenen Anteil von mindestens 3 mMol% mindestens einer eisenkomplexierenden Verbindung und mindestens einen Karbonatdonor in einem auf die eisenkomplexierende Verbindung bezogenen Molverhältnis zwischen 0.3 und 4 enthalten.

8. Bindemittel nach einem der Ansprüche 1 bis 7, gekennzeichnet durch ein Molverhältnis Sulfat zu eisenkomplexierender Verbindung von mehr als 1 und weniger als 20.

9. Bindemittel nach einem der Ansprüche 1 bis 8, gekennzeichnet durch ein Molverhältnis Sulfat zu eisenkomplexierender Verbindung von mindestens 3 und höchstens 8.

10. Bindemittel nach einem der Ansprüche 1 bis 9, dadurch gekennzeichnet, dass der Karbonatdonor in einem auf die eisenkomplexierende Verbindung bezogenen Molverhältnis von mehr als 1 und vorzugsweise weniger als 3 vorliegt.

11. Bindemittel nach einem der Ansprüche 1 bis 10, dadurch gekennzeichnet, dass der Portlandzementklinker in einer Mahlfeinheit nach Blaine von mindestens 4000 cm²/g, vorzugsweise von zwischen 4500 cm²/g und 5500 cm²/g vorliegt.

12. Bindemittel nach einem der Ansprüche 1 bis 11, dadurch gekennzeichnet, dass die Zusatzmittel als Karbonatdonor in Wasser sowohl lösliche als auch wenig bis unlösliche Salze der Kohlensäure enthalten, insbesondere Calciumkarbonat, Magnesiumkarbonat und/oder Dolomit enthält, wobei die Salze durch Vermahlen und/oder thermisches Behandeln aktiviert worden sind, und dass die Menge der im Wasser wenig bis unlöslichen Salze zwischen 2 Gew.-% und 20 Gew.-% liegt.

13. Bindemittel nach einem der Ansprüche 1 bis 12, dadurch gekennzeichnet, dass die Zusatzmittel als Karbonatdonor mindestens ein wasserlösliches Salz der Kohlensäure, insbesondere Alkalikarbonate und/ oder Alkalihydrogenkarbonate, und als eisenkomplexierende Verbindung mindestens ein wasserlösliches Salz der Polyoxycarbonsäure oder der Polycarbonsäure oder ein Diketon, enthalten.

14. Bindemittel nach einem der Ansprüche 1 bis 13, dadurch gekennzeichnet, dass die Zusatzmittel als Karbonatdonor Kaliumkarbonat, Kaliumkarbonattrihydrat oder Kaliumhydrogenkarbonat und als eisenkomplexierende Verbindung Trikaliumzitratmonohydrat oder eine Mischung aus Di-Kaliumoxalat-Monohydrat und Trikaliumzitratmonohydrat, wobei der Anteil an Di-Kaliumoxalat-Monohydrat weniger als 50 mMol% beträgt, enthalten.

15. Bindemittel nach einem der Ansprüche 1 bis 14, dadurch gekennzeichnet, dass die Zusatzmittel einen auf den Klinker bezogenen Anteil von mindestens 4.5 mMol%, vorzugsweise mindestens 7.5 mMol% an Kaliumzitratmonohydrat enthalten.

16. Bindemittel nach einem der Ansprüche 1 bis 15, dadurch gekennzeichnet, dass die Zusatzmittel einen auf den Klinker bezogenen Anteil von mindestens 11 mMol% an Zitronensäure enthalten.

17. Bindemittel nach einem der Ansprüche 1 bis 16, dadurch gekennzeichnet, dass die Zusatzmittel zur Erlangung einer hohen Frühfestigkeit einen auf den Klinker bezogenen Anteil von mindestens 5 mMol% und höchstens 25 mMol% an Karbonat enthalten.

18. Bindemittel nach einem der Ansprüche 1 bis 17, dadurch gekennzeichnet, dass die Zusatzmittel zur Erlangung einer hohen Langzeitfestigkeit einen auf den Klinker bezogenen Anteil von mindestens 9 mMol% und höchstens 30 mMol% an Bikarbonat enthalten.

19. Bindemittel nach einem der Ansprüche 1 bis 18, dadurch gekennzeichnet, dass die Zusatzmittel auch Puzzolanerde, Tonminerale, Flugaschen und/oder feinstverteilte reaktive Silika umfassen.

20. Mörtel oder Frischbeton, gekennzeichnet durch ein hydraulisches Bindemittel nach einem der Ansprüche 1 bis 19, und einen Wasser/Zement-Wert im Bereich von 0.25-0.40, insbesondere von 0.30-0.37.

21. Verfahren zur Herstellung eines Portlandzements zur Verwendung in einem Bindemittel nach einem der Ansprüche 1 bis 19, dadurch gekennzeichnet, dass Portlandzementklinker zusammen mit einem gegebenen Mengenverhältnis an Dihydrat und Anhydrit vermahlen wird, so dass der Calciumsulphathalbhydratgehalt des erzeugten Portlandzements einen vorbestimmten maximalen Wert hat, der kleiner als 50 Gew.-% des gesamten Calciumsulphatgehalts im Portlandzement gerechnet als Dihydrat ist.

22. Verfahren zur Herstellung eines Portlandzements zur Verwendung in einem Bindemittel nach einem der Ansprüche 1 bis 19, bei welchem Portlandzementklinker zusammen mit einer gegebenen Menge an Dihydrat vermahlen wird, dadurch gekennzeichnet, dass die Prozesstemperatur und/oder die Feuchtigkeit beim Vermahlen so eingestellt wird bzw. werden, dass der Calciumsulphathalbhydratgehalt des erzeugten Portlandzements einen vorbestimmten maximalen Wert hat, der kleiner als 50 Gew.-% des gesamten Calciumsulphatgehalts im Portlandzement gerechnet als Dihydrat ist.

## Claims

1. A hydraulic binder for the production of concrete having a high early and long-term strength, based on Portland cement with calcium sulphate phases and additives for adjusting the working properties, setting time and early and/or long-term strength, the additives containing, for the purpose of increasing the strength, at least one carbonate donor, especially water-soluble salts of carbonic acid, and at least one iron-complexing compound, especially a water-soluble salt of polyoxycarboxylic acid or of polycarboxylic acid or a diketone, characterised in that the Portland cement has a defined maximum calcium sulphate hemihydrate content of less than 50 % by weight of the total calcium sulphate content in the Portland cement calculated as the dihydrate.

2. A hydraulic binder for the production of concrete having a high early and long-term strength, based on Portland cement with calcium sulphate phases and additives for adjusting the working properties, setting time and early and/or long-term strength, characterised in that the Portland cement has a defined maximum calcium sulphate hemihydrate content of less than 20 % by weight calculated as the dihydrate, and contains gypsum, anhydrite or a mixture of the two as calcium sulphate-containing additives for extending the setting time, and potassium bicarbonate as the carbonate donor.

3. A binder according to either claim 1 or claim 2, characterised in that the Portland cement is based on a Portland cement clinker having a proportion of more than 10 % by weight C3A, and the calcium sulphate hemihydrate content calculated as the dihydrate is less than 10 % by weight.

4. A binder according to any one of claims 1 to 3, characterised in that the amount of the calcium sulphate-containing additive is so calculated that the calcium sulphate content of the binder calculated as CaSO4 is from 0.7 % by weight to 0.8 % by weight.

5. A binder according to any one of claims 1 to 4, characterised in that the Portland cement is based on a Portland cement clinker having a proportion of more than 8 % by weight C3A and a proportion of more than 0.9 % by weight K2O, and the calcium sulphate hemihydrate content is less than 5 % by weight.

6. A binder according to any one of claims 1 to 5, characterised in that the Portland cement is based on a Portland cement clinker having a proportion of more than 9 % by weight C3A and a proportion of more than 1.0 % by weight K2O, and the calcium sulphate hemihydrate content is less than 1 % by weight.

7. A binder according to any one of claims 1 to 6, characterised in that the additives contain a proportion, based on the clinker, of at least 3 mmol % of at least one iron-complexing compound and contain at least one carbonate donor in a molar ratio based on the iron-complexing compound of from 0.3 to 4.

8. A binder according to any one of claims 1 to 7, characterised by a molar ratio of sulphate to iron-complexing compound of more than 1 and less than 20.

9. A binder according to any one of claims 1 to 8, characterised by a molar ratio of sulphate to iron-complexing compound of at least 3 and at most 8.

10. A binder according to any one of claims 1 to 9, characterised in that the carbonate donor is present in a molar ratio based on the iron-complexing compound of more than 1 and preferably less than 3.

11. A binder according to any one of claims 1 to 10, characterised in that the Portland cement clinker is present in a fineness of grind according to Blaine of at least 4000 cm²/g, preferably of from 4500 cm²/g to 5500 cm²/g.

12. A binder according to any one of claims 1 to 11, characterised in that the additives contain as carbonate donor both salts of carbonic acid that are soluble in water and salts of carbonic acid that are sparingly soluble to insoluble in water, especially calcium carbonate, magnesium carbonate and/or dolomite, the salts having been activated by grinding and/or thermal treatment, and the amount of the salts that are sparingly soluble to insoluble in water is from 2 % by weight to 20 % by weight.

13. A binder according to any one of claims 1 to 12, characterised in that the additives contain as carbonate donor at least one water-soluble salt of carbonic acid, especially alkali carbonates and/or alkali hydrogen carbonates, and contain as iron-complexing compound at least one water-soluble salt of polyoxycarboxylic acid or of polycarboxylic acid or a diketone.

14. A binder according to any one of claims 1 to 13, characterised in that the additives contain as carbonate donor potassium carbonate, potassium carbonate trihydrate or potassium hydrogen carbonate and, as iron-complexing compound, tripotassium citrate monohydrate or a mixture of dipotassium oxalate monohydrate and tripotassium citrate monohydrate, the proportion of dipotassium oxalate monohydrate being less than 50 mmol %.

15. A binder according to any one of claims 1 to 14, characterised in that the additives contain a proportion of potassium citrate monohydrate based on the clinker of at least 4.5 mmol %, preferably at least 7.5 mmol %.

16. A binder according to any one of claims 1 to 15, characterised in that the additives contain a proportion of citric acid based on the clinker of at least 11 mmol %.

17. A binder according to any one of claims 1 to 16, characterised in that, for the purpose of obtaining a high early strength, the additives contain a proportion of carbonate based on the clinker of at least 5 mmol % and at most 25 mmol %.

18. A binder according to any one of claims 1 to 17, characterised in that, for the purpose of obtaining a high long-term strength, the additives contain a proportion of bicarbonate based on the clinker of at least 9 mmol % and at most 30 mmol %.

19. A binder according to any one of claims 1 to 18, characterised in that the additives also comprise pozzuolana, clay minerals, flue ashes and/or dispersed reactive silica.

20. A mortar or green concrete, characterised by a hydraulic binder according to any one of claims 1 to 19, and a water/cement value in the range of from 0.25 to 0.40, especially from 0.30 to 0.37.

21. A process for the manufacture of a Portland cement for use in a binder according to any one of claims 1 to 19, characterised in that the Portland cement clinker is ground together with a given quantitative ratio of dihydrate and anhydrite so that the calcium sulphate hemihydrate content of the Portland cement produced has a predetermined maximum value that is less than 50 % by weight of the total calcium sulphate content in the Portland cement calculated as the dihydrate.

22. A process for the manufacture of a Portland cement for use in a binder according to any one of claims 1 to 19, in which Portland cement clinker is ground together with a given amount of dihydrate, characterised in that the process temperature and/or the humidity during grinding is/are so adjusted that the calcium sulphate hemihydrate content of the Portland cement produced has a predetermined maximum value that is less than 50 % by weight of the total calcium sulphate content in the Portland cement calculated as the dihydrate.

## Revendications

1. Liant hydraulique pour la préparation de béton présentant une résistance élevée à court terme et à long terme, à base de ciment de Portland avec des phases de sulfate de calcium et des additifs pour ajuster l'aptitude au traitement, le temps de prise, la résistance à court terme et/ou à long terme, les additifs contenant, pour augmenter la résistance, au moins un donneur de carbonate, en particulier des sels hydrosolubles de l'acide carbonique, et au moins un composé complexant le fer, en particulier un sel hydrosoluble de l'acide polyoxycarboxylique ou de l'acide polycarbonique ou une dicétone, caractérisé en ce que le ciment de Portland a une teneur maximum définie en semihydrate de sulfate de calcium de moins de 50 % en poids de la teneur globale en sulfate de calcium calculée dans le ciment de Portland comme dihydrate.

2. Liant hydraulique pour la préparation de béton ayant une résistance élevée à court terme et à long terme, à base de ciment de Portland avec des phases de sulfate de calcium et des additifs pour l'ajustement de l'aptitude au traitement, le temps de prise, la résistance à court terme et/ou à long terme, caractérisé en ce que le ciment de Portland a une teneur maximum définie en semihydrate de sulfate de calcium de moins de 20 % en poids calculée comme dihydrate et en ce qu'il contient du plâtre, de l'anhydrite ou un mélange des deux en tant qu'additif à teneur de sulfate de calcium pour prolonger le temps de prise et du bicarbonate de potassium en tant que donneur de carbonate.

3. Liant selon l'une des revendications 1 ou 2, caractérisé en ce que le ciment de Portland est à base de clinker de ciment de Portland avec une proportion de plus de 10 % en poids de C3A et en ce que la teneur en semihydrate de sulfate de calcium calculée comme dihydrate est inférieure à 10 % en poids.

4. Liant selon l'une des revendications 1 à 3, caractérisé en ce que la quantité de l'additif à teneur en sulfate de calcium est mesurée -de telle sorte que la teneur en sulfate de calcium du liant calculée en tant que CaS04 se situe entre 0,7 % en poids et 8 % en poids.

5. Liant selon l'une des revendications 1 à 4, caractérisé en ce que le ciment de Portland est à base de clinker de ciment de Portland ayant une proportion supérieure à 8 % en poids de C3A et une proportion supérieure à 0,9 % en poids de K2O et en ce que la teneur en semihydrate de sulfate de calcium est inférieure à 5 % en poids.

6. Liant selon l'une des revendications 1 à 5, caractérisé en ce que le ciment de Portland est à base de clinker de ciment de Portland avec une proportion supérieure à 9 % en poids de C3A et une proportion supérieure à 1,0 % en poids de K2O et en ce que la teneur en semihydrate de sulfate de calcium est inférieure à 1 % en poids.

7. Liant selon l'une des revendications 1 à 6, caractérisé en ce que les additifs contiennent une proportion rapportée au clinker d'au moins 3 mmoles % d'au moins un composé complexant le fer et au moins un donneur de carbonate dans un rapport molaire rapporté au composé complexant le fer entre 0,3 et 4.

8. Liant selon l'une des revendications 1 à 7, caractérisé par un rapport molaire entre le sulfate et le composé complexant le fer supérieur à 1 et inférieur à 20.

9. Liant selon l'une des revendications 1 à 8, caractérisé par un rapport molaire entre le sulfate et le composé complexant le fer d'au moins 3 et d'au plus 8.

10. Liant selon l'une des revendications 1 à 9, caractérisé en ce que le donneur de carbonate se présente dans un rapport molaire rapporté au composé complexant le fer supérieur à 1 et de préférence inférieur à 3.

11. Liant selon l'une des revendications 1 à 10, caractérisé en ce que le clinker de ciment de Portland se présente dans une finesse de broyage selon Blaine d'au moins 4000 cm²/g, de préférence entre 4500 cm²/g et 5500 cm²/g.

12. Liant selon l'une des revendications 1 à 11, caractérisé en ce que les additifs contiennent en tant que donneur de carbonate dans l'eau aussi bien des sels solubles que des sels peu solubles jusqu'à insolubles de l'acide carbonique, en particulier du carbonate de calcium, du carbonate de magnésium et/ou de la dolomite, les sels étant activés par broyage et/ou traitement thermique et en ce que la quantité des sels peu solubles jusqu'à insolubles dans l'eau se situe entre 2 % en poids et 20 % en poids.

13. Liant selon l'une des revendications 1 à 12, caractérisé en ce que les additifs contiennent en tant que donneur de carbonate au moins un sel hydrosoluble de l'acide carbonique, en particulier les carbonates alcalins et/ou des hydrogénocarbonates alcalins et en tant que composé complexant le fer au moins un sel hydrosoluble de l'acide polyoxycarboxylique ou de l'acide polycarboxylique ou une dicétone.

14. Liant selon l'une des revendications 1 à 13, caractérisé en ce que les additifs contiennent en tant que donneur de carbonate du carbonate de potassium, du trihydrate de carbonate de potassium ou de l'hydrogénocarbonate de potassium et en tant que composé complexant le fer du monohydrate de citrate de tripotassium ou un mélange à partir de di- oxalate de potassium - monohydrate et de monohydrate de citrate de tripotassium, la proportion en dioxalate de potassium - monohydrate étant inférieure à 50 % en mmole.

15. Liant selon l'une des revendications 1 à 14, caractérisé en ce que les liants contiennent une proportion rapportée au clinker d'au moins 4,5 % en mmole, de préférence au moins 7,5 % en mmole de monohydrate de citrate de potassium.

16. Liant selon l'une des revendications 1 à 15, caractérisé en ce que les liants contiennent une proportion rapportée au clinker d'au moins 11 % en mmole d'acide citrique.

17. Liant selon l'une des revendications 1 à 16, caractérisé en ce que les additifs destinés à obtenir une résistance élevée à court terme contiennent une proportion rapportée au clinker d'au moins 5 % en mmole et au plus de 25 % en mmole de carbonate.

18. Liant selon l'une des revendications 1 à 17, caractérisé en ce que les liants destinés à l'obtention d'une résistance élevée à long terme contiennent une proportion rapportée au clinker d'au moins 9 % en mmole et d'au plus 30 % en mmole de bicarbonate.

19. Liant selon l'une des revendications 1 à 18, caractérisé en ce que les additifs renferment également des terres de Pouzzolane, des minéraux d'argile, des cendres volatiles et/ou de la silice réactive finement divisée.

20. Mortier ou béton frais caractérisé par un liant hydraulique selon l'une des revendications 1 à 19, et une valeur eau/ciment dans la plage de 0,25 - 0,40, en particulier de 0,30 - 0,37.

21. Procédé pour la préparation d'un ciment de Portland pour l'utilisation dans un liant selon l'une des revendications 1 à 19, caractérisé en ce que le clinker de ciment de Portland est broyé conjointement avec un rapport quantitatif donné de dihydrate et d'anhydrite de telle sorte que la teneur en semihydrate de sulfate de calcium du ciment de Portland obtenu a une valeur maximum prédéterminée qui est inférieure à 50 % en poids de la teneur en sulfate de calcium globale dans le ciment de Portland calculée comme dihydrate.

22. Procédé pour la préparation d'un ciment de Portland destiné à l'utilisation dans un liant selon l'une des revendications 1 à 19, dans lequel les clinkers de ciment de Portland sont broyés conjointement avec une quantité donnée de dihydrate, caractérisé en ce que la température du traitement et/ou l'humidité lors du broyage sont régulées de telle sorte que la teneur en semihydrate de sulfate de calcium du ciment de Portland produit a une valeur maximum prédéterminée qui est inférieure à 50 % en poids de la teneur en sulfate de calcium globale dans le ciment de Portland calculée comme dihydrate.
